# EUROPÄISCHE PATENTSCHRIFT

(11) **EP 1 042 639 B1**
(45) Veröffentlichungstag und Bekanntmachung des Hinweises auf die Patenterteilung: **25.02.2004**
(21) Anmeldenummer: 99971079.1
(22) Anmeldetag: 26.10.1999
(51) Int. Cl.: F25B 39/04

(54) **VERFAHREN UND VERFLÜSSIGER ZUM KONDENSIEREN DES INNEREN KÄLTEMITTELS EINER KRAFTFAHRZEUGKLIMATISIERUNG**
METHOD AND CONDENSER FOR CONDENSING THE INTERNAL COOLANT OF A MOTOR VEHICLE AIR CONDITIONING
PROCEDE ET CONDENSEUR POUR LA CONDENSATION DU REFRIGERANT INTERNE D'UNE CLIMATISATION DE VEHICULE AUTOMOBILE

(30) Priorität: 27.10.1998 DE 19849528; 23.04.1999 DE 19918616
(43) Veröffentlichungstag der Anmeldung: 11.10.2000
(73) Patentinhaber: Valeo Klimatechnik GmbH, 68766 Hockenheim (DE)
(72) Erfinder: HAUSSMANN, Roland, D-69168 Wiesloch (DE)
(74) Vertreter: Jung HML Patentanwälte
(86) Internationale Anmeldenummer: PCT/EP1999/008075
(87) Internationale Veröffentlichungsnummer: WO 2000/025071

(56) Entgegenhaltungen:
- PATENT ABSTRACTS OF JAPAN vol. 1998, no. 05, 30. April 1998 (1998-04-30) & JP 10 009713 A (DENSO CORP), 16. Januar 1998 (1998-01-16) in der Anmeldung erwähnt
- PATENT ABSTRACTS OF JAPAN vol. 015, no. 325 (M-1148), 19. August 1991 (1991-08-19) & JP 03 122472 A (NIPPONDENSO CO LTD), 24. Mai 1991 (1991-05-24) in der Anmeldung erwähnt

## Beschreibung

Die Erfindung bezieht sich auf die Verflüssigung eines Kältemittels einer Kraftfahrzeugklimatisierung und betrifft dabei ein Verfahren gemäß dem Oberbegriff von Anspruch 1 sowie einen Verflüssiger gemäß dem Oberbegriff von Anspruch 6. Der Verflüssiger ist dabei insbesondere, aber nicht ausschließlich, zum Ausführen des Verfahrens bestimmt. Die Merkmale der Oberbegriffe der Ansprüche 1 und 6 sind aus der JP-A-03-122472 A bekannt.

Bei dem bekannten Verfahren und bei dem bekannten Verflüssiger erfolgt in einem oberen Höhenbereich des Verflüssigers zunächst eine Teilkondensation. Ein vertikales Verteil/Sammel-Rohr übt dabei zugleich die Funktion eines ersten Gasabscheiders aus. Von diesem aus verzweigt sich der Strömungsweg des inneren Kältemittels auf zwei Parallelwege. Der erste Parallelweg wird dabei von dem die abgeschiedene Gasphase enthaltenden oberen Raum des Gasabscheiders aus gespeist und führt seine aus gesättigter Flüssigkeit und Gasphase bestehende Kältemittelmischung einem ausgangsseitig gesondert angeordneten zweiten Gasabscheider zu. Dieser kommuniziert mit einem zweiten Weg, in welchem das Kältemittel aus der Flüssigkeitsvorlage des ersten Gasabscheiders entnommen und unterkühlt wird. Die unterkühlte Flüssigkeit und die aus dem zweiten Gasabscheider entnommene Flüssigkeit werden danach vereint und gemeinsam aus dem Verflüssiger entnommen. Bei diesem vorbekannten Verflüssiger ist jedoch das Flüssigkeitsniveau im ersten Gasabscheider in Abhängigkeit von unterschiedlichen und/oder sich ändernden Füllmengen des inneren Kältemittels und/oder wechselnden Betriebszuständen des Kraftfahrzeuges veränderlich. Eine ungewollte Beaufschlagung des ersten Parallelweges mit der nur als Flüssigkeit vorliegenden flüssigen Phase des ersten Gasabscheiders kann daher nur bei sehr breitem Querschnitt des ersten Gasabscheiders und damit verbunden sehr hohen Füllmengen und hohem Platzbedarf vermieden werden, was den Anforderungen einer Minimalisierung des Einbaubedarfs im Kraftfahrzeug, der ökologisch gewünschten geringen Verwendung von umweltschädlichem inneren Kältemittel sowie der allgemein angestrebten möglichst geringen Verwendung von Material zuwiderläuft. Auch ausgangsseitig hat der bekannte Verflüssiger eine Vielzahl von Elementen und Leitungsverbindungen, die möglichst vermieden werden sollten und ein zusätzliches Undichtigkeitsrisiko bilden.

Der Erfindung liegt die Aufgabe zugrunde, auch bei unterschiedlichen und/oder sich ändernden Füllmengen des inneren Kältemittels und/oder wechselnden Betriebszuständen des Kraftfahrzeugs eine sichere Verflüssiger- und Unterkühlfunktion selbst mit geringer Menge inneren Kältemittels zu erreichen und dabei eine kompakte Bauweise des Verflüssigers zu ermöglichen.

Diese Aufgabe wird durch das Verfahren gemäß Anspruch 1 und den Verflüssiger gemäß Anspruch 6, der zum Ausführen des Verfahrens nach Anspruch 1 und vorzugsweise auch von Anspruch 2 geeignet ist, gelöst.

Im Gegensatz zu dem bekannten Verflüssiger werden nach der Erfindung der erste und der zweite Parallelweg bzw. jeweils das erste oder das zweite Wärmetauschrohr praktisch mit demselben Gemisch von flüssiger und gasförmiger Phase des inneren Kältemittels gespeist, wie dieses aus den strömungsmäßig (jeweils) letzten dritten Wärmetauschrohren austritt. Etwaige relative Gemischänderungen sind dabei nur relativ klein und kommen beispielsweise durch Trägheitsunterschiede oder dadurch zustande, daß der Eintritt in den ersten und in den zweiten Strömungsweg in unterschiedlicher Höhe erfolgt. Eine Einrichtung zum Trennen von flüssiger und Gasphase im Eintrittsbereich in den ersten und in den zweiten parallelen Strömungsweg ist dabei nicht vorgesehen. Stattdessen wird die Unterkühlung und damit zugleich auch die selbsttätige Resorption beim Eintritt etwa noch vorhandener Gasphase dadurch vorgenommen, daß auf dem zweiten Strömungsweg das innere Kältemittel länger der Kühlwirkung des äußeren Kühlmittels ausgesetzt wird als auf dem ersten Strömungsweg. Die Ansprüche 2 bis 4 ergeben für die hierzu erforderliche Verlangsamung der Strömung des inneren Kältemittels auf dem zweiten Strömungsweg verschiedene bevorzugte verfahrensmäßige Möglichkeiten und die Ansprüche 22 bis 24 verschiedene vorrichtungsmäßige bevorzugte Möglichkeiten. Man erkennt, daß alternativ eine Drosselung der Strömung des Kältemittels auf dem zweiten Strömungsweg und/oder eine unterschiedliche Druckhöhe an den Eingängen des ersten und des zweiten Strömungsweges vorgesehen werden, wobei die eingangsseitige unterschiedliche Druckhöhe unter Geschwindigkeitsänderung des inneren Kältemittels aufgrund des Bernoullieffektes, also eine Düsencharakteriskik, erzeugt werden kann.

Aus dem Patent Abstracts of Japan mit der Veröffentlichungsnummer 10009713 A (Veröffentlichungstag 16.01.1998) ist es an sich schon bekannt, zwei parallele Wege, die hier beide zur Unterkühlung bestimmt sind, wiederum jeweils gesondert zu speisen, und zwar einmal über einen Weg der Teilkondensierung und das andere Mal nur aus der Flüssigphase eines nach Teilkondensierung zwischengeschalteten Gasabscheiders. Auch hier wird also der eine Parallelweg aus zugeführter Flüssigphase gespeist. Außerdem ist nicht sichergestellt, daß der andere Parallelweg nicht trotz der Vereinigung mit dem erstgenannten Parallelweg noch Gasphase aus dem Verflüssiger mitführt. Diese erst jüngst bekanntgewordene Konstruktion beharrt also auf dem auch dem Stand der Technik gemäß den Oberbegriffen der Ansprüche 1 und 6 zugrundeliegenden Vorurteil, einen Unterkühlungsweg von einer flüssigen Phase des teilkondensierten Kühlmittels speisen zu müssen.

Die erfindungsgemäße Verfahrensweise und der erfindungsgemäße Verflüssiger beruhen ebenso wie der erwähnte Stand der Technik auf dem Prinzip, den Strömungsweg nach Teilkondensation des inneren Kältemittels in zwei Wege mit unterschiedlicher Einflußnahme auf das innere Kältemittel aufzuspalten.

Daneben gibt es noch das eher konventionelle Verfahren nebst zugehörigen Verflüssigern, das innere Kältemittel nach Teilkondensation ohne Aufspaltung in unterschiedliche Beeinflussungen des Kältemittels vornehmende Parallelwege direkt bis in einen unterkühlten Zustand weiterzuführen, wobei aber auch hier die Unterkühlzone von flüssiger Phase der vorher vorgenommenen Teilkondensation gespeist wird. Die übliche Verfahrensweise besteht dabei darin, der unterkühlten Zone einen Gasabscheider vorzuschalten, wie dies auch schon bei dem gattungsgemäßen Stand der Technik bezüglich des zweiten Strömungsweges der Fall ist (vgl. insbesondere DE-42 38 853 A1 sowie die Patent Abstracts of Japan J07180930 A2, veröffentlicht 18.07.1995, und J09166371 A2, veröffentlicht 24.06.1997).

Nach dem Verfahren gemäß Anspruch 5 (und einer entsprechenden Weiterbildung des Verflüssigers nach Anspruch 25) erfolgt die Vorkondensation räumlich unterhalb der weiteren Beeinflussung des inneren Kältemittels auf den beiden erwähnten Parallelwegen. Eine Anordnung von Vorkondensationsrohren im unteren Bereich eines Verflüssigers ist an sich bekannt (vgl. z.B. die schon erwähnten Patent Abstracts of Japan mit den Aktenzeichen J07166371 A2 und J 0387572 A2).

Die Erfindung gemäß Anspruch 6 kann insbesondere auch die im vierten Ausführungsbeispiel verwirklichte spezielle Aufgabe lösen, den Ölaustrag aus dem Verflüssiger zu verbessern und Versperrungen einzelner insbesondere als Flachrohre ausgebildeter "dritter" Wärmetauschrohre, die jeweils im unteren Kammerbereich eintreten, zu verhindern und dadurch die Leistung des Verflüssigers zu verbessern.

Auch diese spezielle Aufgabe wird bei einem Verflüssiger mit den Merkmalen des Oberbegriffs von Anspruch 6 durch dessen kennzeichnenden Merkmale gelöst.

Bei einem solchen, diese spezielle Aufgabe lösenden Verflüssiger erfolgt der Eintritt des Kältemittels in den Verflüssiger oben und der Überhitzungs- und Kondensationsbereich ist so von oben nach unten verschaltet, daß keine Ablagerung von flüssigem Kältemittel oder Öl in unteren Kammerbereichen mehr erfolgen kann, da jeweils vom untersten Rohr wieder eine Abführung in die nächste gegenüberliegende Kammer erfolgt.

Anspruch 6 ist aber nicht auf eine Lösung dieser speziellen Aufgabe beschränkt, bei der das jeweilige erste Wärmetauscherrohr in Bezug auf das oder die zweite(n) Wärmetauschrohre auf einem höheren Niveau angeordnet ist. Solche anderweitigen Ausführungsbeispiele eines Verflüssigers nach Anspruch 6 zeigen die Ausführungsbeispiele 1 bis 3, die anhand der Ansprüche 21 bis 30 noch spezifisch weitergebildet sind.

Im Vergleich mit dem ersten und dem zweiten Ausführungsbeispiel erfolgt bei einem die spezielle Aufgabe von Anspruch 6 lösenden Verflüssiger durch die geänderte Höhenlage des Kältemitteleintritts in das Verteil- und Sammelrohr 6 auch eine spezielle Nutzung des Zwischenkanals 42, nämlich zur Hochleitung von gesättigter Flüssigkeit mit Gasblasen gegen die Schwerkraftrichtung zum Eintritt in den oberen Bereich des Sammelbehälters 46, dessen Funktion sonst grundsätzlich wie beim ersten und beim zweiten Ausführungsbeispiel ist.

Anders als beim dritten Ausführungsbeispiel sind sonst die Funktionen des die spezielle Aufgabe lösenden Verflüssigers gemäß Anspruch 6 vergleichbar mit dem ersten und dem zweiten Ausführungsbeispiel.

In den Ansprüchen 13 bis 20 wird der Trocknereinsatz in einer Bauweise weitergebildet, die bei allen Ausführungsbeispielen einsetzbar ist. Dies gilt auch für die vorteilhaften Weiterbildungen gemäß den Ansprüchen 21 bis 24.

Anspruch 25 mit der Weiterbildung gemäß Anspruch 26 bietet demgegenüber eine Alternativlösung für den Fall an, daß wie bei dem Gegenstand der JP-A 03-122472 A2, von der die Oberbegriffe der Ansprüche 1 und 6 ausgehen, die Vorkondensation oberhalb der Aufspaltung des nach der Vorkondensation erfolgenden Weges des inneren Kältemittels in zwei Parallelwege vorgenommen wird. Bei diesem vorbekannten Verflüssiger ist, wie schon früher erwähnt, ausgangsseitig ein vom Verflüssiger gesonderter Gasabscheider vorgesehen. Die Erfindung gemäß den Ansprüchen 29 und 30 integriert diesen Gasabscheider in eine mittlere Abteilung eines Verteil/Sammel-Rohres ohne die Notwendigkeit, das Verteil/Sammel-Rohr in horizontaler Richtung in mehrere Kammern aufzuteilen. Eine Aufteilung eines Verteil/Sammel-Rohres in mehrere übereinanderliegende Kammern ist an sich bekannt (vgl. z.B. die dreikammerige Unterteilung des Patent Abstracts of Japan J09166371 A2, bei der jedoch keine der Kammern als Gasabscheider weitergebildet ist.

Sowohl beim ersten als auch beim zweiten Ausführungsbeispiel ist der Kältemitteleintritt 10 in den Verflüssiger unten angeordnet. Das Kältemittel fließt dann durch die Kammern 22, 24, 26 und 28 gegen die Schwerkraftrichtung nach oben. Insbesondere bei kleineren Strömungsgeschwindigkeiten des Kältemittels kann es dabei vorkommen, daß sich flüssiges Kältemittel sowie in diesem aus dem Kältemittelkreislauf mitgeführtes Schmieröl jeweils in unteren Kammerbereichen absondern. Hierdurch kann das in die jeweilige Kammer eintretende unterste "dritte" Wärmetauschrohr 14 mehr oder minder verstopft werden, so daß innere Austauschfläche verlorengeht und die Leistung des Verflüssigers reduziert wird. Auch fehlt dann insbesondere solches Öl, das im unteren Bereich der Kammer 22 abgesondert wird, für die Schmierung des Verdichters des Kältemittelkreislaufes.

Die Erfindung wird im folgenden anhand schematischer Zeichnungen an mehreren Ausführungsbeispielen noch näher erläutert. Es zeigen:
Fig. 1 einen vertikalen Querschnitt durch eine erste Ausführungsform eines Verflüssigers;
Fig. 2 in vergrößerter Darstellung einen horizontalen Teilschnitt durch das in Fig. 1 rechts dargestellte Verteil/Sammel-Rohr mit baulich integriertem Sammelbehälter;
Fig. 3 eine vergrößerte Teildarstellung von Fig. 1;
Fig. 3a ein auf Fig. 3 bezogenes thermodynamisches Zustandsdiagramm;
Fig. 4 einen vertikalen Teilquerschnitt einer zweiten Ausführungsform eines Verflüssigers;
Fig. 4a ein auf Fig. 4 bezogenes thermodynamisches Zustandsdiagramm;
Fig. 5 einen vertikalen Teilschnitt einer dritten Ausführungsform eines Verflüssigers und
Fig. 5a ein auf Fig. 5 bezogenes thermodynamisches Zustandsdiagramm.
Fig. 6 in Anlehnung an Fig. 1 und Fig. 4 einen vertikalen Querschnitt durch die vierte Ausführungsform eines Verflüssigers;
Fig. 7 in vergrößerter Darstellung einen horizontalen Teilschnitt durch das in Fig. 6 links dargestellte Verteil/Sammel-Rohr mit baulich integriertem Sammelbehälter in Anlehnung an Fig. 2;
Fig. 8 in vergrößerter Darstellung einen vertikalen Teilquerschnitt im unteren Bereich des Sammelbehälters sowie dem anschließenden Bereich des Verflüssigers; und
Fig. 9 ein auf die vorliegende vierte Ausführungsform bezogenes thermodynamisches Zustandsdiagramm in Anlehnung an das Zustandsdiagramm gemäß Fig. 5a.

Allen vier Ausführungsbeispielen ist folgendes gemeinsam:

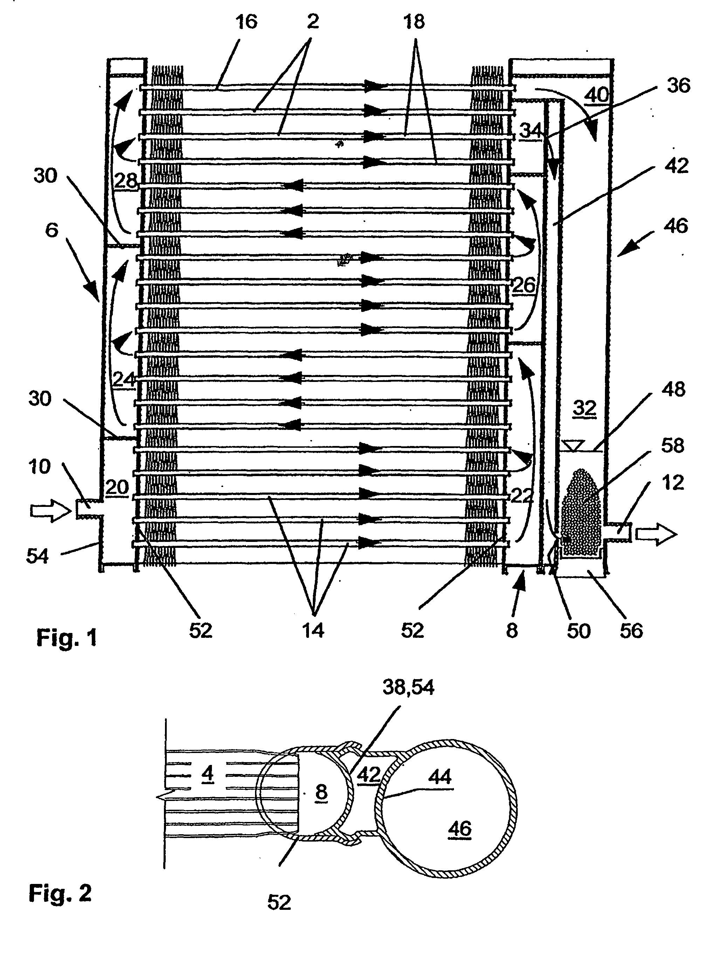

Es ist ein Netz von horizontal orientierten und parallel übereinander angeordneten Wärmetauschrohren 2 vorgesehen. Diese können jede konventionelle Form und Materialart haben. Bevorzugt ist an Flachrohre aus Aluminium oder einer Aluminiumlegierung gedacht, die durch dazwischen mit Hartlot eingelötete Zick-Zack-Lamellen 4 zu einem steifen Register vereint sind. Da der Verflüssiger für eine Kraftfahrzeugklimatisierungseinrichtung bestimmt ist, wird dieses Register von außen senkrecht zur Zeichnungsebene z.B. der Figuren 1 sowie 3 bis 5 von Umgebungsluft des Kraftfahrzeugs beaufschlagt, die hier als äußeres Kühlmittel dient. Als inneres Kältemittel der Wärmetauschrohre 2 kann jedes geeignete Kältemittel dienen, wie beispielsweise R134a oder gemäß zukünftiger Konzeption CO₂.

Die eingangseitige und ausgangsseitige Versorgung der Wärmetauschrohre 2 durch das innere Kühlmittel erfolgt über zwei vertikal verlaufende Verteil/Sammel-Rohre 6 und 8, deren schaltungsmäBige Zuordnung zu den einzelnen Wärmetauschrohren 2 bei den vier Ausführungsbeispielen verschieden ist.

Das innere Kältemittel tritt in das eine Verteil/Sammel-Rohr über einen Eintrittsanschluß 10 ein und über einen Austrittsanschluß 12 aus, der je nach der Verschaltung an demselben Verteil/Sammel-Rohr in nicht dargestellter Weise angeordnet sein kann, bei den Darstellungen z.B. der Figuren 1, 3 und 4 an dem anderen Verteil/Sammel-Rohr bzw. einem mit diesem baulich vereinten Bauteil angeordnet ist.

Schließlich stimmen alle Verflüssiger darin überein, daß bei ihnen nach Art ihrer Kühlfunktion drei Arten von Wärmetauschrohren zu unterscheiden sind, denen drei verschiedene Wege des inneren Kältemittels entsprechen, die, wie erwähnt, jeweils über die Verteil/Sammel-Rohre verschaltet sind.

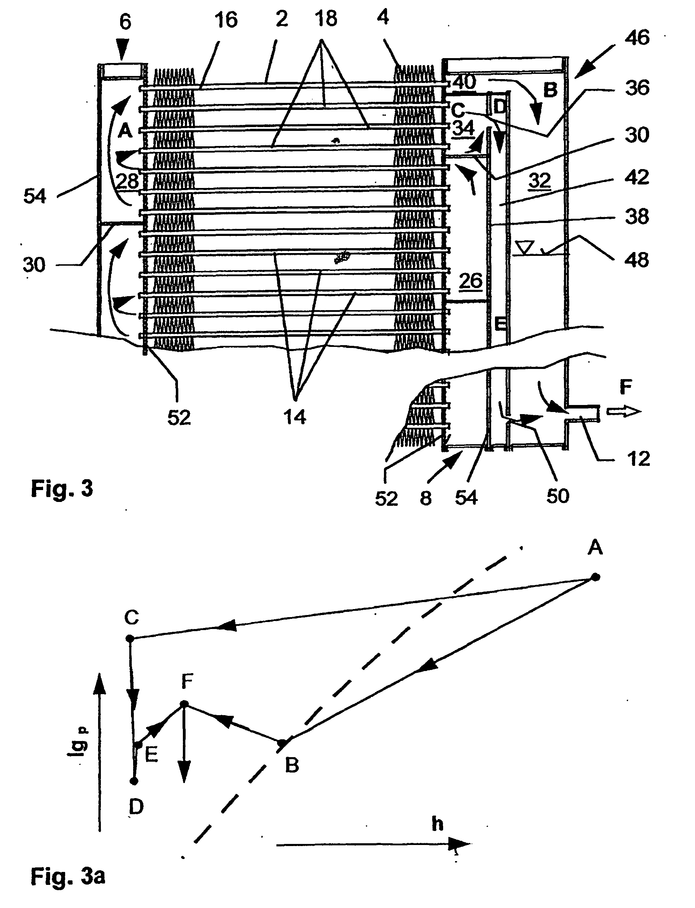

So wird generell das vom Eintrittsanschluß 10 kommende innere Kältemittel, welches mindestens im wesentlichen gasförmig ist, meist sogar in überhitztem Zustand, mindestens einem "dritten" Wärmetauschrohr 14 zugeführt. Auf dem dazugehörigen dritten Strömungsweg wird das innere Kältemittel zunächst im Einflußbereich der äußeren Kühlluft aus der Gasphase in die flüssige Phase teilkondensiert, so daß bei dem Austritt aus diesem dritten Strömungsweg noch eine Mischung flüssiger und gasförmiger Phase vorliegt. Dies ist in den Zustandsdiagrammen der Figuren 3a, 4a und 5a jeweils durch den Zustand A gezeigt, der zusammen mit anderen Zuständen in den genannten Diagrammen angegeben ist, in denen der Druck p des inneren Kältemittels logarythmisch über der Enthalpie h aufgetragen ist. In diesem Diagramm ist die linke Grenzkurve des Zweiphasengebietes der Zustände für gesättigte Flüssigkeit mit eingezeichnet, so daß in dem ausgezogen darstellten Zustandsdiagramm alle in der Zeichnungsebene rechts liegenden Zustände noch Gasphase enthalten, alle links liegenden Zustände reinem Flüssigkeitszustand entsprechen.

Am Ausgang dieses dritten Strömungsweges teilt sich die Fortsetzung des Strömungsweges des inneren Kältemittels auf zwei Parallelwege, nämlich den ersten und den zweiten Parallelweg entsprechend den mindestens einen "ersten" Wärmetauschrohr 16 und dem mindestens einem "zweiten" Wärmetauschrohr 18 auf.

Auf dem ersten Parallelweg entsprechend dem jeweiligen Wärmetauschrohr 16 wird unter weiterer Kühlung durch das äußere Kühlmittel der Umgebungsluft das vom dritten Strömungsweg kommende Gemisch aus flüssiger und gasförmiger Phase des inneren Kältemittels ohne Zwischenbehandlung weiter in den gesättigten Zustand kondensiert, wobei immer noch etwas Gasphase verbleiben kann. Diese wird dann jeweils vom inneren Kältemittel abgeschieden.

Auf dem zweiten Parallelweg entsprechend dem jeweiligen zweiten Wärmetauschrohr 18 wird ebenso die Mischung von flüssiger und Gasphase des dritten Strömungsweges entsprechend dem jeweiligen dritten Wärmetauschrohr 14 ohne Zwischenbehandlung unmittelbar entnommen, jedoch dann länger als auf dem ersten Strömungsweg dem abkühlenden Einfluß des äußeren Kühlmittels der Umgebungsluft ausgesetzt und dadurch unterkühlt. In diesem unterkühlten Zustand wird aufgenommene Gasphase ohne das Erfordernis einer gesonderten Abscheidung resorbiert, so daß am Ausgang des zweiten Strömungsweges im inneren Kältemittel keine Gasphase mehr enthalten ist. Sollte unter Sonderumständen doch noch Einschlüsse von Gasphase auf diesem zweiten Strömungsweg enthalten sein, kondensieren diese ohne das Erfordernis weiterer Maßnahmen spätestens unter den Vibrationen des Kraftfahrzeugbetriebes wieder im inneren Kältemittel.

Die durch Gasabscheidung reine flüssige Phase des aus dem ersten Strömungsweg austretenden inneren Kältemittels wird dann mit dem aus dem zweiten Strömungsweg austretenden unterkühlten inneren Kältemittel vereint und gemeinsam in flüssiger Phase dem Austrittsanschluß 12 zugeführt.

Konstruktiv erfolgt bei allen Ausführungsbeispielen auch die Speisung des jeweiligen dritten Wärmetauschrohres 14 mit dem inneren Kältemittel aus dem mit dem Eintrittsanschluß 10 versehenen Verteil/Sammel-Rohr 6 in an sich bekannter Weise. Von einer Eintrittskammer 20 im Verteil/Sammel-Rohr 6 wird eine Vielzahl von - bei Aluminium-Flachrohren typischerweise 6 - 8 - dritten Wärmetauschrohren parallel ge, speist. Die Austrittsenden dieser Wärmetauschrohre münden in eine Sammel- und Verteilkammer 22 im Verteil/Sammel-Rohr 8, von wo aus eine in der Anzahl kleinere Vielzahl von dritten Wärmetauschrohren 14 im Rückstrom zum Verteil/Sammel-Rohr 6 zurückgeleitet werden.

Bei den Ausführungsbeispielen 1 bis 3 ist im Verteil/Sammel-Rohr 6 eine weitere Sammel- und Verteilkammer 24 vorgesehen, von der aus in jeweils wiederum jeweils abnehmende Anzahl der dritten Wärmetauschrohre diese über eine Verteil- und Sammelkammer 26 im Verteil/Sammel-Rohr 8 in eine letzte Verteil- und Sammelkammer 28 im Verteil/Sammel-Rohr 6 zurückgeleitet werden. Auf der letztgenannten Rückleitungsstrecke ist dabei im Falle von Aluminium-Flachrohren typischerweise die Anzahl der parallel beaufschlagten Wärmetauschrohre 14 auf 2 bis 4 reduziert, wobei in den Ausführungsbeispielen jeweils nur noch drei Wärmetauschrohre 14 dargestellt sind.

Die Verteil- und Sammelkammern, insbesondere die Kammern 22 bis 28, sind jeweils in dem Verteil/Sammel-Rohr 6 bzw. Verteil/Sammel-Rohr 8 durch eine einfache Querwand 30 voneinander strömungsmäßig gänzlich abgeteilt.

Aus dem jeweiligen ersten Strömungsweg tritt ebenfalls bei allen Ausführungeformen das Kältemittel jeweils in einen Gasabscheider 32 ein, der jedoch in den einzelnen Ausführungsbeispielen unterschiedlich realisiert ist.

Die Besonderheiten der Ausführungsbeispiele 1 bis 3 liegen in folgendem:

Bei dem ersten Ausführungsbeispiel der Figuren 1 bis 3a beschränkt sich der erste Strömungsweg ohne Beschränkung der Allgemeinheit auf ein einziges erstes Wärmetauschrohr 16. Aus diesem tritt das meist noch mit etwas Gasphase entsprechend dem Zustandspunkt B im Diagramm von Fig. 3a versehene innere Kältemittel, der genau auf der gestrichelten Sättigungslinie liegt, in den Gasabscheider 32 ein, der nachfolgend noch näher im einzelnen erläutert wird.

Das aus den letzten drei dritten Wärmetauschrohren 14 kommende innere Kältemittel des bereits erwähnten Zustandes A im Zustandsdiagramm wird dabei nicht nur dem Eingang des ersten Wärmetauschrohres 16, sondern ohne weitere Modifikation und insbesondere ohne zwischengeschaltete Gasabscheidung den ohne Beschränkung der Allgemeinheit in dreifacher Anzahl parallel miteinander beaufschlagten zweiten Wärmetauschrohren 18 zugeführt. Diese münden alle in einer Sammelkammer 34 im Verteil/Sammel-Rohr 8, welches in Strömungssrichtung nachfolgend mit einer allein drei zweiten Wärmetauschrohren 18 gemeinsamen Drosseleinrichtung 36 versehen ist, die hier als drosselnder Durchgang in der Außenwand 38 des Verteil/Sammel-Rohres ausgebildet ist. Aufgrund der Drosselwirkung dieser Drosseleinrichtung 36 erfolgt in den zweiten Wärmetauschrohren 18 der Durchgang des inneren Kältemittels weitaus langsamer als durch das erste Wärmetauschrohr 16, wodurch auf diesem zweiten Wärmetauschweg eine in der Sammelkammer 34 realisierte Unterkühlung gemäß dem Zustandspunkt C des Diagramms der Fig. 3a realisiert wird. Mittels der Drosseleinrichtung wird das innere Kältemittel bei gleicher Enthalpie hinter der Drosseleinrichtung auf einen niedrigeren Druck abgesenkt, was dem Zustandsdiagramm von Fig. 3a den Zustandspunkt D entspricht.

Vor der weiteren Diskussion der Zustandsänderungen sei noch die konkrete bauliche Ausgestaltung dieses ersten Ausführungsbeispieles weiter betrachtet:

Wie besonders deutlich aus dem horizontalen Querschnitt von Fig. 2 hervorgeht, ist parallel zu dem Verteil/Sammel-Rohr 8 an dessen dem Rohrregister abgewandter Außenwand 38 in baulich integrierter Form eine zusätzliche Kammerausbildung vorgesehen. Dabei erstreckt sich unterhalb einer Sammelkammer 40, in welcher das erste Wärmetauschrohr 16 mündet, in Abtrennung gegenüber dieser Sammelkammer 40 eine vertikal längs des Verteil/Sammel-Rohres 8 verlaufende rohrartige Kammer 42, die auf der der Außenwand 38 des Verteil/Sammel-Rohres 8 gegenüberliegenden Seite eine eigene Außenwand 44 hat, welche mit einem rohrförmigen Sammelbehälter 46 größeren horizontalen Querschnitts gemeinsam ist. Dieser Sammelbehälter, der gemäß Fig. 2 kreisrunde Form haben kann, aber nicht haben muß, kommuniziert oben frei mit der Sammelkammer 40 des ersten Wärmetauschrohres 16. Die rohrartige Kammer 42 ihrerseits kommuniziert mit dem Ausgang der Drosseleinrichtung 36, welche den zweiten Strömungsweg strömungsmäßig nachgeordnet ist. Der Sammelbehälter 46 hat seinerseits die schon früher angesprochene Funktion als Gasabscheider, so daß in ihm je nach den Betriebsbedingungen und dem Füllzustand des inneren Kältemittels eine verschieden hoch angeordnete horizontale Phasentrennfläche 48 zwischen der unten liegenden flüssigen Phase und der oben liegenden Gasphase vorhanden ist. Der im allgemeinen vollständig mit unterkühltem inneren Kältemittel angefüllte Innenraum der rohrartigen Kammer 42 kommuniziert unten durch eine Verbindungsöffnung 50 mit dem stets von der flüssigen Phase angefüllten unteren Bereichs des Gasabscheiders 32, wo das innere Kältemittel des ersten und des zweiten Weges miteinander vereint ist und aus dem Austrittsanschluß 12 in dem Austrittsanschluß 12 in Strömungsrichtung weitergeleitet wird.

Baulich ist zweckmäßig mindestens der die verschiedenen Wärmetauschrohre 2 aufnehmende Rohrboden 52 sowohl des Verteil/Sammel-Rohres 8 als auch des Verteil/Sammel-Rohres 6 aus lotbeschichtetem Blech geformt und mit einem Sammlerdekkel 54 zum Sammler ergänzt. Speziell im Falle des Verteil/Sammel-Rohres 8 ist dabei dieser Sammlerdeckel 54 Bestandteil eines Extrusionsformstückes, welches einteilig sowohl die rohrartige Kammer 42 als auch den rohrförmigen Sammelbehälter 46 bildet und zweckmäßig seinerseits aus Aluminium oder einer Aluminiumlegierung besteht. Die Verbindung mit dem Sammlerboden kann zweckmäßig durch eine Innenbeschichtung des doppelseitig beschichteten Blechs des Sammlerbodens mit Lot realisiert sein.

Im Bereich des normalerweise von der flüssigen Phase eingenommenen unteren Bereichs des Sammelbehälters 46 ist noch in einer verschließbaren Zutrittsöffnung 56 am Boden des Sammelbehälters 46 eine Trockenpatrone 58 eingesetzt. In nicht dargestellter Weise kann man im Sammelbehälter 46 auch noch Einrichtungen zur Füllstandskontrolle und zur Messung von Druck und Temperatur mit einbauen, zum Beispiel unter Verwendung entsprechender Sensoren mit entsprechender Diagnoseanzeige.

Die rohrartige Kammer 42 im Anschluß an die Drosseleinrichtung 36 ist im Betrieb des Verflüssigers praktisch vollständig mit unterkühltem Kältemittel gefüllt, so daß am unteren Ende der rohrförmigen Kammer der statische Druck der ganzen Flüssigkeitssäule herrscht, die sich fast über die ganze Höhe des Verflüssigers erstreckt (mit Ausnahme der Höhe des Sammelkammer 40). In dem rohrförmigen Sammelbehälter 46 ist demgegenüber die Höhe der Flüssigkeitssäule unter der Phasentrennfläche 48 immer kleiner und variiert überdies in Abhängigkeit von der Füllstandsmenge sowie den Betriebsbedingungen des Fahrzeugs.

Da also in der rohrartigen Kammer 42 allenfalls am obersten Ende oberhalb der Drosseleinrichtung 36 noch geringfügig Gasphase anfallen kann, besteht ständig eine Höhendifferenz zwischen den am obersten Ende der rohrförmigen Kammer 42 gelegenen Flüssigkeitspegel und der Phasentrennfläche 48 in dem Sammelbehälter 46. Diese Höhendifferenz entspricht der Druckdifferenz zwischen den Zustandspunkten C und D im Zustandsdiagramm der Fig. 3a. In diesem Diagramm entspricht dann der Zustandspunkt E der erneuten Druckzunahme innerhalb der rohrförmigen Kammer 42 entsprechend der Druckzunahme durch die Flüssigkeitssäule zwischen dem ganz oben in der rohrförmigen Kammer 42 gelegenen Flüssigkeitspegel und der Phasentrennfläche 48 in dem Sammelbehälter 46. Bei der Vereinigung der Kältemittelströme des ersten und des zweiten Weges erfolgt dann entsprechend dem Zustandspunkt F im Diagramm von Fig. 3a einerseits auf beiden Wegen noch eine geringe Druckzunahme aufgrund der Flüssigkeitssäule zwischen der Phasentrennfläche 48 und dem Anschluß 12.

Im Sinne der Erfindung ist es dabei erwünscht, daß auf dem ersten Strömungsweg nur ein relativ kleiner Massenstromanteil des Kältemittels im Verhältnis zum Massenstromanteil auf dem zweiten Weg fließt, höchstens 50% des Massenstromanteils, vorzugsweise weniger. Dadurch kann der Gasabscheider 32 ohne Einbuße an seiner Gasabscheidequalität klein dimensioniert werden, hier speziell mit relativ kleinem horizontalen Querschnitt. Das hat zur Folge, daß im Zustandsdiagramm der Fig. 3a der Wert der Enthalpie h höchstens in der Mitte zwischen den Punkten E und B liegt, bei dem angestrebten sehr kleinen Anteil des Massenstroms auf dem ersten Weg sehr deutlich nach links zu in Richtung zum Punkt E verschoben.

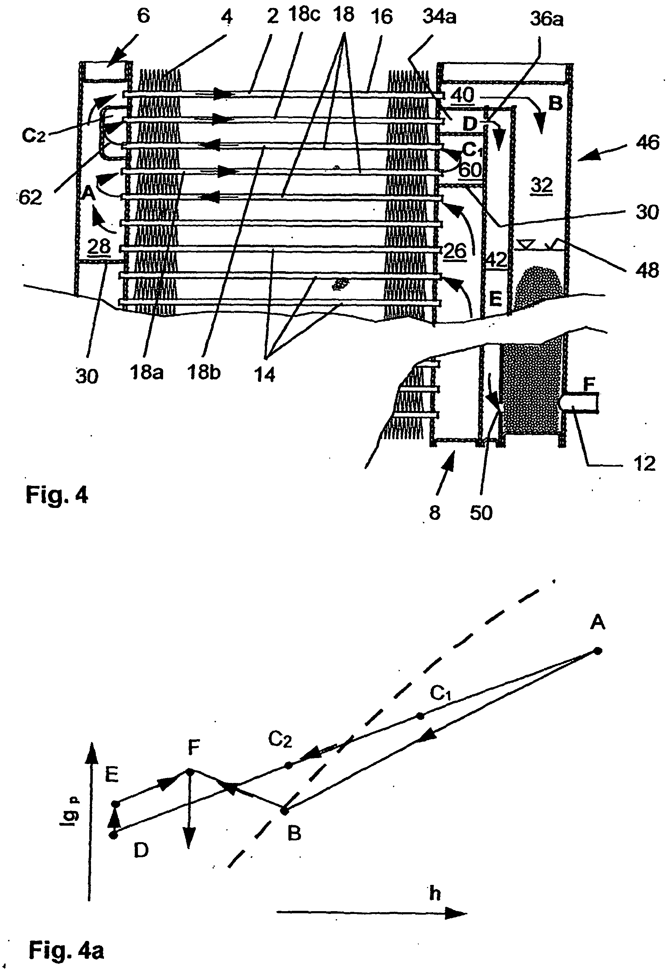

Die zweite Ausführungsform gemäß Fig. 4a ist mit der der Fig. 1 bis 3a identisch mit folgender Ausnahme.

Anstelle der Drosseleinrichtung 36, die vollständig entfallen kann, gegebenenfalls aber kombinativ noch anteilig vorhanden sein könnte, ist eine Abdrosselung des Massenstroms aus dem zweiten Strömungsweg dadurch vorgenommen, daß die Länge des zweiten Strömungswegs im Verhältnis zur Länge des ersten Strömungswegs deutlich erhöht wird, hier um das dreifache. Dabei erfolgt eine Abdrosselung durch innere Reibung in den Wärmetauschrohren 18.

Die Sammelkammer 34 schrumpft hier im Verhältnis zu der Anordnung von Fig. 3 auf eine kleine Sammelkammer 34a, die hinter dem störmungsmäßig letzten 18c des zweiten Strömungsweges angeordnet ist. Diesem Wärmetauschrohr 18c sind in Hin- und Herströmung die beiden Wärmetauschrohre 18a und 18b vorgeordnet. Dabei wird aus der Teil- un Sammelkammer 28 nur noch das zuunterst liegende Wärmetauschrohr 18a direkt gespeist. In einer im Vergleich zu Fig. 3 zusätzlichen Umlenkkammer 60 erfolgt im Gegenstrom die Speisung des Wärmetauschrohres 18b und in einer im Volumen der Verteil- und Sammelkammer 28 eingeschachtelten weiteren Umlenkkammer 62 erfolgt dann die Speisung des schon oben erwähnten Wärmetauschrohres 18c. Die Verbindungsöffnung 36a der Sammelkammer 34a hat hier jetzt keine Drosselfunktion mehr nötig, wenn diese, wie gesagt, auch partiell erhalten bleiben kann.

Das Zustandsdiagramm der Fig. 4a ist dabei insbesondere dadurch im Vergleich zum Zustandsdiagramm der Fig. 3a modifiziert, daß bei dem dreimaligen Durchgang des Kältemittels durch die Wärmetauschrohre 18a, 18b und 18c jeweils ein Druckabfall entsprechend den Zustandspunkten C1, C2 und D erfolgt.

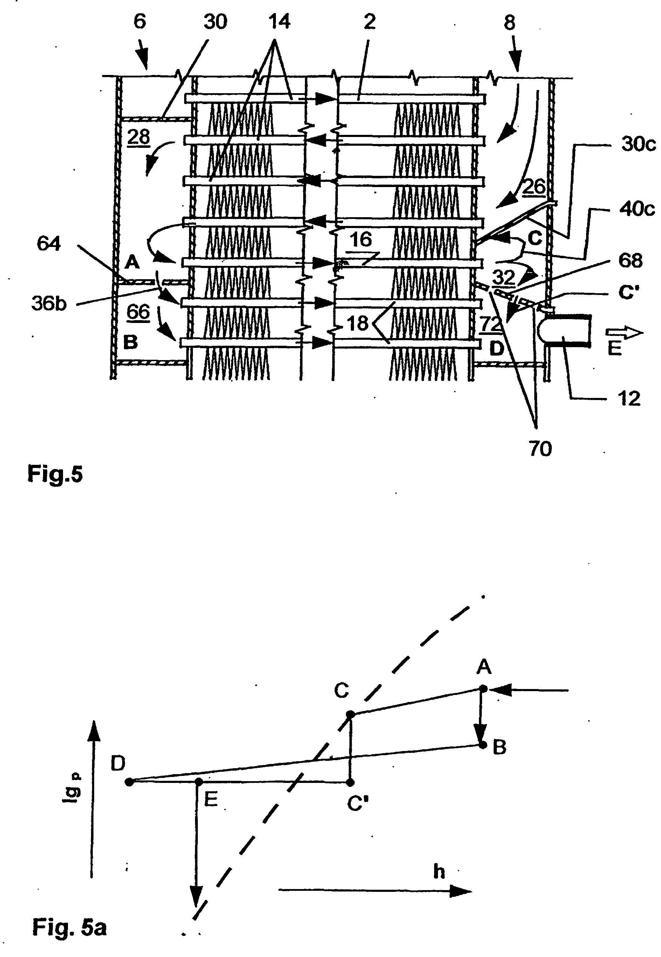

Anhand schließlich der Fig. 5 werden zwei weitere Modifikationen veranschaulicht, die sinngemäß auch zur Abänderung der beschriebenen ersten und zweiten Ausführungsbeispiele jeweils für sich eingesetzt werden können.

Während gemäß dem ersten Ausführungsbeispiel eine Drosselung des Massenstroms auf dem zweiten Strömungsweg an dessen Ende über die Drosseleinrichtung 36 und bei dem zweiten Ausführungsbeispiel durch im Verhältnis zum ersten Strömungsweg erhöhte innere Reibung über die ganze Strecke des zweiten Strömungsweges vorgenommen wird, erfolgt bei der links in Fig. 5 dargestellten Ausbildung des Verteil/Sammel-Rohres 6 eine Drosselung des Massenstroms noch vor Eintritt des Kältemittels vom dritten Strömungsweg in den zweiten Strömungsweg über eine Drosseleinrichtung 36b in einer Querwand 64 zwischen einer Zuleitungskammer 66 zum zweiten Strömungsweg und der allgemeinen (letzten) Verteil- und Sammelkammer 28. Auch eine solche Maßnahme der Reduzierung der Massenstromgeschwindigkeit auf dem zweiten Strömungsweg im Verhältnis zur Massenströmungsgeschwindigkeit auf dem ersten Strömungsweg läßt sich gegebenenfalls mit der früher beschriebenen Drosselungsmöglichkeit längs des zweiten Strömungsweges oder in Strömungsrichtung hinter diesem kombinieren.

Die zweite Variante liegt in der Art des Gasabscheiders 32 hinter dem ersten Strömungsweg bzw. dem ersten Wärmetauschrohr 16.

Eine wesentliche Besonderheit des ersten und des zweiten Ausführungsbeispieles bestand darin, daß dort der dritte Strömungsweg jeweils in einem Bereich unterhalb des zweiten und des über diesem zweiten Strömungsweg angeordneten ersten Strömungsweges angeordnet ist. Bei der dritten Ausführungsform gemäß Fig. 5 ist demgegenüber der dritte Strömungsweg der Wärmetauschrohre 14 oberhalb des ersten Strömungsweges des einen Wärmetauschrohres 16 und des darunter angeordneten zweiten Strömungsweges mit den beiden Wärmetauschrohren 18 angeordnet. Dadurch ergeben sich andere Möglichkeiten der Gasabscheidung, und zwar ohne eine notwendige Angliederung der rohrartigen Kammer 42 und des rohrförmigen Sammelbehälters 46 an das Verteil/Sammel-Rohr 8. Dieses Verteil/Sammel-Rohr 8 kann vielmehr ebenso wie das Verteil/Sammel-Rohr 6 ohne zusätzliche Querunterteilung in Horizontalrichtung oder horizontale Angliederung von Kammern wie beim ersten und zweiten Ausführungsbeispiel ausgebildet sein. Es sei bemerkt, daß man anstelle des ersten und zweiten Ausführungsbeispiels mit angegliederten Kammern auch eine horizontale Unterteilung des Verteil/Sammel-Rohres 8 vorsehen kann nach Art etwa der Umlenkkammer 62 in Fig. 4 im Verteil/Sammel-Rohr 6 des zweiten Ausführungsbeispiels.

Bei dem dritten Ausführungsbeispiel der Fig. 5 mündet das erste Wärmetauschrohr 16 in dem Verteil/Sammel-Rohr 8 in einer Sammelkammer 40c, die hier zugleich die Funktion eines Gasabscheiders 32 erfüllt. Hierzu ist die Sammelkammer 40c an ihrer Oberseite durch eine Trennwand 30c gegenüber der oben anschließende Sammel- und Verteilkammer 26 vollständig strömungsmäßig getrennt. Ferner ist an der Unterseite der Sammelkammer 40c eine weitere Trennwand 68 vorgesehen, die jedoch mit mehreren Öffnungen 70 perforiert ausgebildet ist.

Die beiden Trennwände 30c und 68 haben einen jeweils so vertikal nach außen ausgebogenen Verlauf, daß die Sammelkammer 40c ein sowohl nach vertikal oben als auch nach vertikal unten vergrößertes Volumen erhält. Dabei kann das unterhalb des hochgebogenen Bereichs der Trennwand 30c gewonnene zustätzliche Volumen als vorläufiger Abscheideraum von Gasphase des Gasabscheideraums 32 dienen, während die Trennwand 68 nicht nur das Volumen für die Aufnahme der flüssigen Phase des Gasabscheiders 32 vergrößert, sondern zusätzlich Durchgangsöffnungen für das auf dem ersten Parallelweg austretende Kältemittel zu dem auf dem zweiten Parallelweg über die Wärmetauschrohre 18 austretende unterkühlte Kältemittel für die Mischung des austretenden Kältemittels sowohl aus dem ersten als auch aus dem zweiten Parallelweg zur Verfügung stellt. Dementsprechend ist die Sammelkammer 72 am Ausgang der Wärmetauchrohre 18 des zweiten Parallelweges zugleich Vereinigungskammer mit der aus dem Gasabscheider 32 austretenden Phase und auch gemeinsame Austrittskammer, die mit dem Austrittsanschluß 12 kommuniziert.

Im Zustandsdiagramm nach Fig. 5a geht man, wie bei den Ausführungsbeispielen 1 und 2, von einem teilkondensierten Zustand a aus, der noch rechts von der in Fig. 5a gestrichelt dargestellten Phasentrennlinie im teilkondensierten Bereich liegt. In den ersten Wärmetauschrohren 16 wird dann das Kältemittel einem gesättigten Zustand C auf der Phasentrennlinie zugeführt. Der Druckabfall durch die Öffnungen 70 in der Trennwand 68 wird durch die Druckreduzierung vom Zustandpunkt C zu C' dargestellt.

Auf dem zweiten Strömungsweg wird das Kältemittel zunächst vom gesättigten Zustand A über die Drosselöffnung 36b im Druck auf den Zustand B reduziert und dann in den zweiten Wärmetauschrohren 18 in den unterkühlten Zustand D überführt.

In der Austrittsammelkammer 72 erfolgt dann die Mischung des unterkühlten Zustandes D und des gesättigten Zustands C' entsprechend den Massenströmen zu dem Zustand E, der den Verflüssiger über den Austrittsanschluß 12 verläßt.

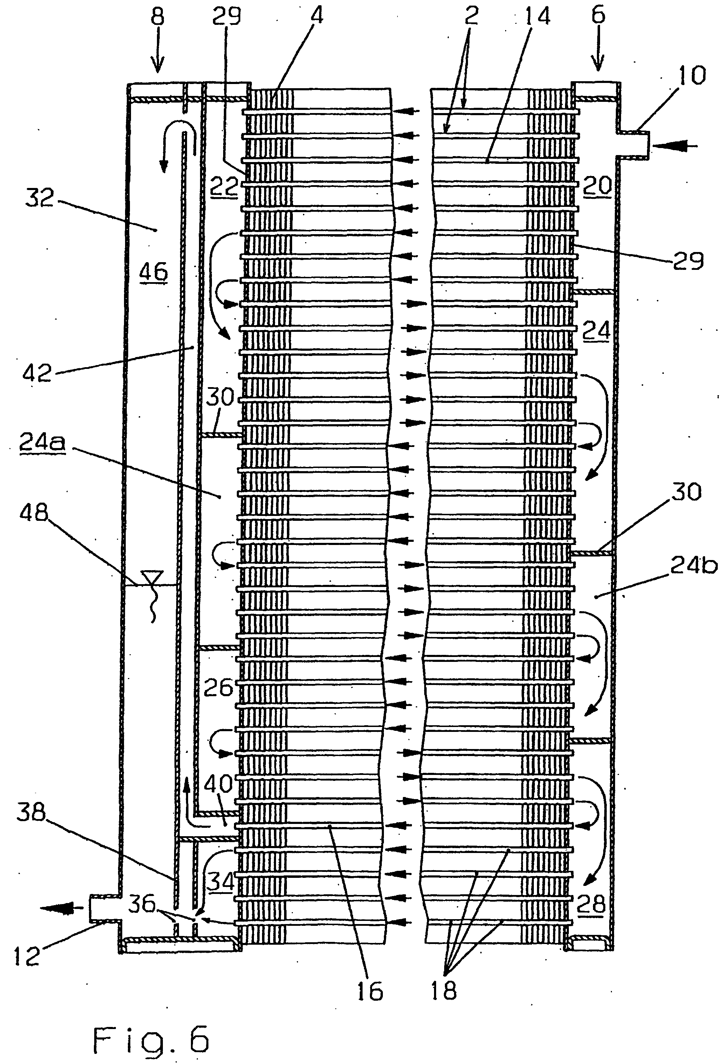

Bei dem vierten Ausführungsbeispiel gemäß den Figuren 6 bis 9 ist ein Netz von horizontal orientierten und parallel übereinander angeordneten Wärmetauschrohren 2 vorgesehen. Diese können jede konventionelle Form und Materialart haben. Bevorzugt ist an Flachrohre aus Aluminium oder einer Aluminiumlegierung gedacht, die durch dazwischen mit Hartlot eingelötete Zick-Zack-Lamellen 4 zu einem steifen Register vereint sind. Da der Verflüssiger für eine Kraftfahrzeugklimatisiereinrichtung bestimmt ist, wird dieses Register von außen senkrecht zur Zeichnungsebene der Fig. 6 von Umgebungsluft des Kraftfahrzeugs beaufschlagt, die hier als äußeres Kühlmittel dient. Als inneres Kältemittel der Wärmetauschrohre 2 kann jedes geeignete Kältemittel dienen, wie beispielsweise R134a oder gemäß zukünftiger Konzeption CO₂.

Die eingangsseitige und ausgangsseitige Versorgung der Wärmetauschrohre 2 durch das innere Kältemittel erfolgt gemäß den in Fig. 6 eingezeichneten Pfeilen über zwei vertikal verlaufende Verteil/Sammel-Rohre 6 und 8.

Das innere Kältemittel tritt in eine Eintrittskammer 20 im oberen Bereich des Verteil/Sammel-Rohres 6 über einen Eintrittsanschluß 10 ein und über einen im unteren Bereich des Sammelbehälters 46 angeordneten Austrittsanschluß 12 aus.

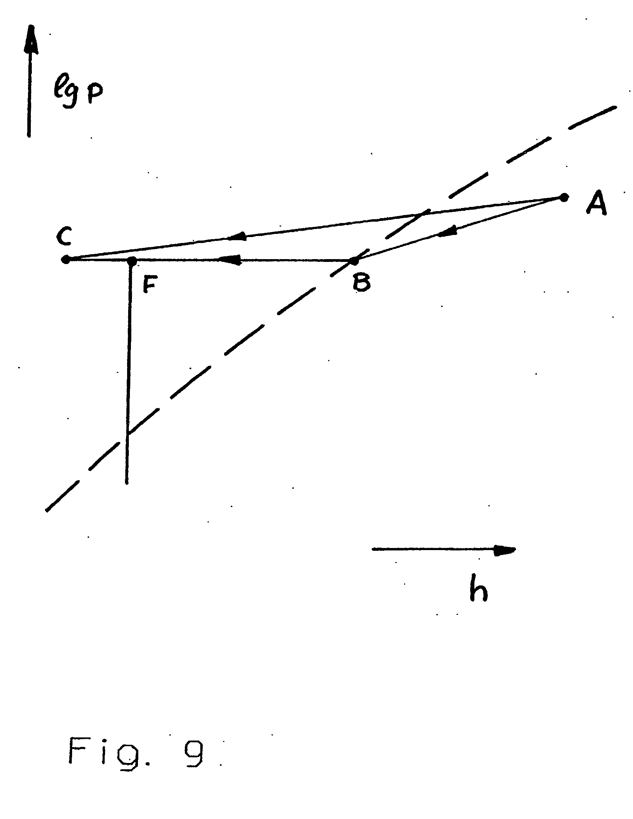

Das vom Eintrittsanschluß 10 kommende innere Kältemittel, welches mindestens im wesentlichen gasförmig ist, meist sogar in überhitztem Zustand, wird von der Eintrittskammer 20 aus mindestens einem "dritten" Wärmetauschrohr 14 zugeführt. Auf dem dazugehörigen dritten Strömungsweg wird das innere Kältemittel zunächst im Einflußbereich der äußeren Kühlluft aus der Gasphase in die flüssige Phase teilkondensiert, so daß bei dem Austritt aus diesem dritten Strömungsweg noch eine Mischung flüssiger und gasförmiger Phase vorliegt. Dies ist in dem Zustandsdiagramm der Fig. 9 durch den Zustand A gezeigt, der zusammen mit anderen Zuständen in dem Diagramm angegeben ist, in dem der Druck p des inneren Kältemittels logarythmisch über der Enthalpie h aufgetragen ist. In diesem Diagramm ist die linke Grenzkurve des Zweiphasengebietes der Zustände für gesättigte Flüssigkeit mit eingezeichnet, so daß in dem ausgezogen darstellten Zustandsdiagramm alle in der Zeichnungsebene rechts liegenden Zustände noch Gasphase enthalten, alle links liegenden Zustände reinem Flüssigkeitszustand entsprechen.

Am Ausgang des "dritten" Strömungsweges teilt sich die Fortsetzung des Strömungsweges des inneren Kältemittels in zwei Parallelwege, nämlich den "ersten" und den "zweiten" Parallelweg entsprechend mindestens einem "ersten" Wärmetauschrohr 16 und mindestens einem "zweiten" Wärmetauschrohr 18 auf.

Auf dem ersten Parallelweg entsprechend dem jeweiligen Wärmetauschrohr 16 wird unter weiterer Kühlung durch das äußere Kühlmittel der Umgebungsluft das vom dritten Strömungsweg kommende Gemisch aus flüssiger und gasförmiger Phase des inneren Kältemittels ohne Zwischenbehandlung weiter in den gesättigten Zustand kondensiert, wobei immer noch etwas Gasphase verbleiben kann. Diese wird dann jeweils in dem Sammelbehälter 48 vom inneren Kältemittel abgeschieden.

Auf dem zweiten Parallelweg entsprechend dem jeweiligen zweiten Wärmetauschrohr 18 wird ebenso die Mischung von flüssiger Phase und Gasphase des dritten Strömungsweges entsprechend dem jeweiligen dritten Wärmetauschrohr 14 ohne Zwischenbehandlung unmittelbar entnommen, jedoch dann länger als auf dem ersten Strömungsweg dem abkühlenden Einfluß des äußeren Kühlmittels der Umgebungsluft ausgesetzt und dadurch unterkühlt. In diesem unterkühlten Zustand wird aufgenommene Gasphase ohne das Erfordernis einer gesonderten Abscheidung resorbiert, so daß am Ausgang des zweiten Strömungsweges im inneren Kältemittel keine Gasphase mehr enthalten ist. Sollten unter Sonderumständen doch noch Einschlüsse von Gasphase auf diesem zweiten Strömungsweg enthalten sein, kondensieren diese ohne das Erfordernis weiterer Maßnahmen spätestens unter den Vibrationen des Kraftfahrzeugbetriebes wieder im inneren Kältemittel.

Die durch Gasabscheidung reine flüssige Phase des aus dem ersten Strömungsweg austretenden inneren Kältemittels wird dann in dem unteren Bereich des Sammelbehälters 48 mit dem aus dem zweiten Strömungsweg austretenden unterkühlten inneren Kältemittel vereint und gemeinsam in flüssiger Phase dem Austrittsanschluß 12 zugeführt.

Konstruktiv wird von der Eintrittskammer 20 im Verteil/Sammel-Rohr 6 wird eine Vielzahl von - bei Aluminium-Flachrohren typischerweise sechs bis acht - "dritten" Wärmetauschrohren 14 parallel gespeist. Die Austrittsenden dieser "dritten" Wärmetauschrohre 14 münden in eine Sammel- und Verteilkammer 22 im Verteil/Sammel-Rohr 8, von wo aus eine in der Anzahl gleiche oder vorzugsweise kleinere Vielzahl von "dritten" Wärmetauschrohren 14 im Rückstrom zu einer Sammel- und Verteilkammer 24 im Verteil/Sammel-Rohr 6 zurückgeführt wird. Entsprechend erfolgt in jeweils abwärts gerichteter Hintereinanderschaltung von "dritten" Wärmetauschrohren 14 zwischen von oben nach unten folgenden Kammern 20, 24, 24b und 28 im Verteil/Sammel-Rohr 6 und Kammern 22, 24a und 26 im Verteil/Sammel-Rohr 8 in jeweils gleicher oder wiederum jeweils abnehmender Anzahl der "dritten" Wärmetauschrohre 14 eine Weiterleitung bis zu einer letzten Verteil/Sammel-Kammer 28 im Verteil/Sammel-Rohr 6. Auf der letztgenannten Rückleitungsstrecke ist dabei im Falle von Aluminium-Flachrohren typischerweise die Anzahl der parallel beaufschlagten Wärmetauschrohre 14 auf zwei bis vier reduziert, wobei in dem Ausführungsbeispiel zuletzt noch drei Wärmetauschrohre 14 vorgesehen sind, deren Anzahl sich im Rhythmus 8, 6, 5, 4, 4, 3 reduziert hat.

Die genannten Verteil- und Sammelkammern 22, 24, 24a, 24b, 26 und 28 sind jeweils in dem Verteil/Sammel-Rohr 6 bzw. Verteil/Sammel-Rohr 8 durch eine einfache Querwand 30 voneinander strömungsmäßig gänzlich abgeteilt, wobei eine Seitenwand des Verteil/Sammel-Rohres 6 bzw. 8 jeweils einen Rohrboden 52 für die Wärmetauschrohre 14, 16 und 18 bildet.

Der erste Strömungsweg beschränkt sich ohne Beschränkung der Allgemeinheit auf ein einziges "erstes" Wärmetauschrohr 16. Aus diesem tritt durch den vertikal im Verteil/Sammel-Rohr 8 verlaufenden Zwischenkanal 31 das meist noch mit etwas Gasphase (entsprechend dem genau auf der gestrichelten Sättigungslinie liegenden Zustandspunkt B im Diagramm von Fig. 9) versehene innere Kältemittel in die obere Gasphase des Gasabscheiders 32 ein, der von dem rohrförmigen Sammelbehälter 46 gebildet ist.

Das aus den letzten drei "dritten" Wärmetauschrohren 14 kommende innere Kältemittel des bereits erwähnten Zustandes A im Zustandsdiagramm wird dabei nicht nur dem Eingang des ersten Wärmetauschrohres 16, sondern ohne weitere Modifikation und insbesondere ohne zwischengeschaltete Gasabscheidung den ohne Beschränkung der Allgemeinheit in vierfacher Anzahl parallel miteinander beaufschlagten "zweiten" Wärmetauschrohren 18 zugeführt. Diese münden alle in einer Sammelkammer 34 im Verteil/Sammel-Rohr 8, welches in Strömungssrichtung nachfolgend mit einer allen drei zweiten Wärmetauschrohren 18 gemeinsamen Drosseleinrichtung 36 versehen ist, die hier als drosselnder Durchgang in der Außenwand 38 des Verteil/Sammel-Rohres 8 ausgebildet ist. Aufgrund der Drosselwirkung dieser Drosseleinrichtung 36 erfolgt in den zweiten Wärmetauschrohren 18 der Durchgang des inneren Kältemittels weitaus langsamer als durch das erste Wärmetauschrohr 16, wodurch auf diesem zweiten Wärmetauschweg eine in der Sammelkammer 34 realisierte Unterkühlung gemäß dem Zustandspunkt C des Diagramms der Fig. 9 realisiert wird. Mittels der Drosseleinrichtung wird das innere Kältemittel bei gleicher Enthalpie hinter der Drosseleinrichtung auf einen niedrigeren Druck abgesenkt. Die Sammelkammer 34 und die Drosseleinrichtung 36 bilden einen horizontal orientierten Querkanal 33, über den die "zweiten" Wärmetauschrohre mit dem unteren Bereich des Sammelbehälters 46 kommunizieren.

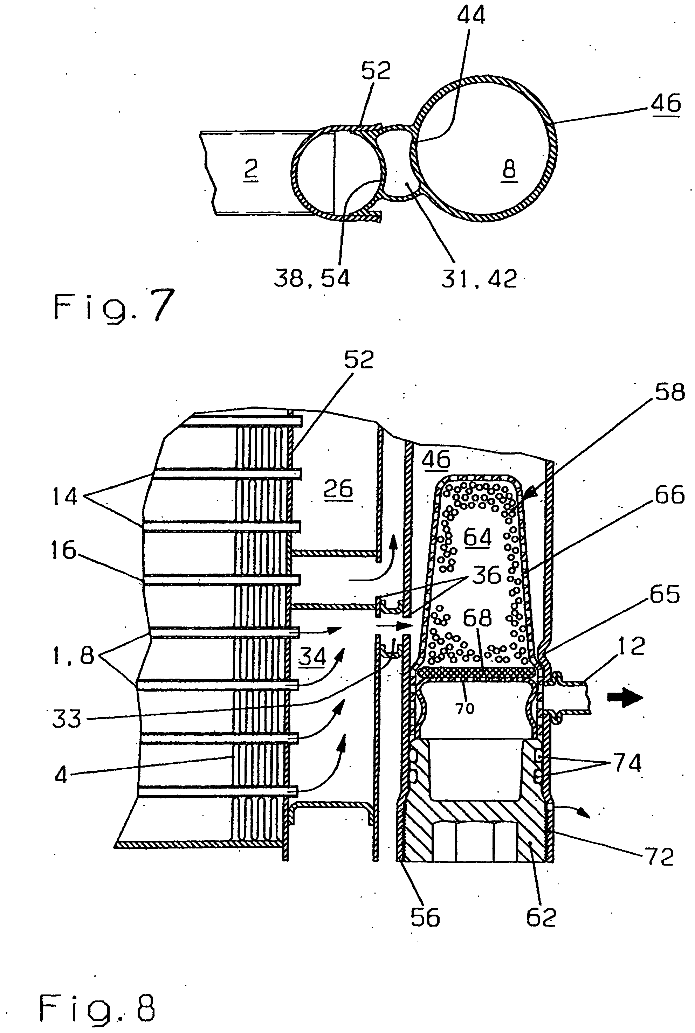

Wie besonders deutlich aus dem horizontalen Querschnitt von Fig. 7 hervorgeht, ist parallel zu dem Verteil/Sammel-Rohr 8 an dessen dem Rohrregister abgewandten Außenwand 38 in baulich integrierter Form eine zusätzliche Kammerausbildung zur Schaffung des Zwischenkanals 31 vorgesehen. Dabei erstreckt sich oberhalb einer Sammelkammer 40, in welcher das erste Wärmetauschrohr 16 mündet, in Abtrennung gegenüber dieser Sammelkammer 40 der vertikal längs des Verteil/Sammel-Rohres 8 verlaufende rohrartige Zwischenkanal 31 als eigene Kammer 42, die auf der der Außenwand 38 des Verteil/Sammel-Rohres 8 gegenüberliegenden Seite eine eigene Außenwand 44 hat, welche mit dem rohrförmigen Sammelbehälter 46 größeren horizontalen Querschnitts gemeinsam ist. Der obere Bereich dieses Sammelbehälters 46, der gemäß Fig. 7 kreisrunde Form haben kann, aber nicht haben muß, kommuniziert über den vertikalen Zwischenkanal 31 mit der Sammelkammer 40 des ersten Wärmetauschrohres 16. Die rohrartige Kammer 42 kommuniziert unten im Wege des horizontalen Querkanals 33 mit dem Ausgang der Drosseleinrichtung 36, welche dem zweiten Strömungsweg strömungsmäßig nachgeordnet ist. Der Sammelbehälter 46 hat seinerseits die schon früher angesprochene Funktion als Gasabscheider, so daß in ihm je nach den Betriebsbedingungen und dem Füllzustand des inneren Kältemittels eine verschieden hoch angeordnete horizontale Phasentrennfläche 48 zwischen der unten liegenden flüssigen Phase und der oben liegenden Gasphase vorhanden ist. Die im allgemeinen vollständig mit unterkühltem inneren Kältemittel angefüllte Sammelkammer 34 am strömungsmäßigen Ende der "zweiten" Wärmetauschrohre 18 kommuniziert unten durch eine der Drosseleinrichtung 36 zurechenbare Verbindungsöffnung 50 am Ende des Querkanals 33 mit dem stets von der flüssigen Phase angefüllten unteren Bereich des Gasabscheiders 32, wo das innere Kältemittel des ersten und des zweiten Weges miteinander vereint ist und aus dem Austrittsanschluß 12 in Strömungsrichtung weitergeleitet wird.

Baulich ist zweckmäßig mindestens der die verschiedenen Wärmetauschrohre 2 aufnehmende Rohrboden 52 sowohl des Verteil/Sammel-Rohres 8 als auch des Verteil/Sammel-Rohres 6 aus lotbeschichtetem Blech geformt und mit einem Sammlerdekkel 54 zum Sammler ergänzt. Speziell im Falle des Verteil/Sammel-Rohres 8 ist dabei dieser Sammlerdeckel 54 Bestandteil eines Extrusionsformstückes, welches einteilig sowohl die rohrartige Kammer 42 als auch den rohrförmigen Sammelbehälter 46 bildet und zweckmäßig seinerseits aus Aluminium oder einer Aluminiumlegierung besteht. Die Verbindung mit dem Sammlerboden kann zweckmäßig durch eine Innenbeschichtung des doppelseitig beschichteten Blechs des Sammlerbodens mit Lot realisiert sein.

Im Bereich des normalerweise von der flüssigen Phase eingenommenen unteren Bereichs des Sammelbehälters 46 ist noch in einer verschließbaren Zutrittsöffnung 56 am Boden des Sammelbehälters 46 eine Trockenpatrone 58 eingesetzt. In nicht dargestellter Weise kann man im Sammelbehälter 46 auch noch Einrichtungen zur Füllstandskontrolle und zur Messung von Druck und Temperatur mit einbauen, zum Beispiel unter Verwendung entsprechender Sensoren mit entsprechender Diagnoseanzeige.

Gemäß Fig. 7 sind der rohrförmige Sammelbehälter 46, der Zwischenkanal 31 und das Verteil/Sammel-Rohr 8 mit Ausnahme des Rohrbodens 52 wiederum integral ausgeführt, wobei der kreisförmige Querschnitt des Sammelbehälters 46 relativ zu den anderen genannten Teilen, insbesondere auch im Durchmesser des wiederum kreisförmigen Verteil/Sammel-Rohres 8, eine größere Bemessung, hier speziell Durchmesserbemessung, hat. Neu ist, daß der Zwischenkanal 31 einen symmetrischen Querschnitt nach Art eines jeweils an der gemeinsamen Wand von Sammelbehälter 46 und Verteil/Sammel-Rohr 8 im gleichen Maße gekrümmt eingedrückten Ovals hat, dessen Längsachse quer, in der Zeichnungsebene von Fig. 2 im wesentlichen vertikal, zu den kreisförmigen Konturen von Sammelbehälter 46 und Verteil/Sammel-Rohr 8 verläuft. Dies ermöglicht eine einfachere Ausbildung der jeweiligen Endabschlußkappe.

Gemäß Fig. 8 ist der Trocknereinsatz 58 zwischen einem unteren Verschlußteil 62 des Sammelbehälters 46 und einem innerhalb des Sammelbehälters 46 ausgebildeten Anschlag 65 eingespannt. Der Trocknereinsatz 58 ist dabei mehrteilig ausgebildet. Die wirksame Trocknerfüllung 64 in Form eines Trockenmittels (Molekularsieb XH7 oder XH9) wird dabei in einem Filtersack angeliefert und in einem strömungsdurchlässigen Käfig 66 in Gestalt eines napfartigen Siebeinsatzes gehalten, in welchen zunächst der angelieferte Filtersack eingesetzt wird. Anschließend wird ein Filtervließ 68 auf den Boden des napfförmigen Käfigs aufgelegt und danach ein in axialer Richtung elastisch nachgiebiger siebartiger Dekkeleinsatz 70 im Käfig von unten her gegen das Filtervließ 68 aufgesteckt. Der Trocknereinsatz 58 ist dadurch mehrteilig zu einer Trocknerpatrone zusammengefügt, die von unten her in den rohrförmigen Sammelbehälter 46 bis in Anlage an den Anschlag 65 eingesteckt werden kann.

Der untere Verschlußteil 62 ist seinerseits ein Schraubstopfen, der in einer unteren Erweiterung des Rohres, welches den Sammelbehälter 46 bildet, über ein Gewinde 72 mit der Innenfläche dieser erweiterten Rohrwand in Gewindeeingriff tritt. Im nach innen anschließenden schmaleren Bereich des Rohres des Sammelbehälters 46 sind axial hintereinander zwei O-Ring-Abdichtungen zur Bildung einer Dichteinrichtung 74 angeordnet. Im Schulterbereich des Übergangs des erweiterten Rohres in den normalen Rohrdurchmesser des Sammelbehälters 46 ist bei geschlossenem Sammelbehälter in einer Höhe oberhalb des Eingriffs des Gewindes 72 und unterhalb der Dichteinrichtung 74 eine als Ablaßöffnung wirksame Druckentlastungsöffung 76 im Rohrmantel des Sammelbehälters 46 vorgesehen. Die Gewindelänge des Gewindes 72 ist so lang bemessen, daß beim Aufschrauben des Verschlußteils 62 zu dessen Lösung zunächst die O-Ringe der Dichteinrichtung 74 den O-Ring-Sitz an der Innenfläche der Wand des Rohres verlassen, so daß Kältemittel an der Druckentlastungsöffnung 76 austreten kann, ehe das Gewinde 72 außer Eingriff kommt. Hierdurch kann beispielsweise ein Austausch des Trocknereinsatzes 58 ohne explosionsähnliche Kältemittelentlastung erfolgen.

Der Anschlag 65 ist über zweckmäßig drei über den Umfang des Gehäusemantels des Sammelbehälters 46 verteilte Eindellungen gebildet. Dadurch wird der Trocknereinsatz 58 so zwischen dem unteren Verschlußteil 62 und diesen Eindellungen eingeklemmt, daß das Trockenmittel abriebfrei in der Patrone gehalten wird. Toleranzen in der Trockenmittelfüllmenge werden dabei durch die elastische Ausbildung des siebartigen Deckeleinsatzes 70 aufgenommen.

Die Funktionsweise eines solchen Verflüssigers gemäß dem vierten Ausführungsbeispiel ist folgende:

Das überhitzte Kältemittel tritt im oberen Bereich des Verteil- und Sammelrohres 6 durch den Eintrittsanschluß 10 ein und wird dann in den Umlenkkammern 20, 22, 24, 24a, 24b, 26 und 28 zickzackförmig im Verflüssiger nach unten geführt. Es tritt dabei nahezu gesättigt gemäß dem Zustandspunkt A in Fig. 9 in die Kammer 28 ein, wo es auf den ersten und zweiten Weg aufgeteilt wird. Auf dem ersten Weg des (jeweiligen) Wärmetauschrohres 16 kann es ohne weitere strömungsseitige Restriktionen durch den Zwischenkanal 31 in den oberen Bereich des Sammlers 46 strömen, während am Austritt der zweiten Wärmetauschrohre 18 zwischen der austrittsseitigen Kammer 34 des Verteil- und Sammelrohres 8 und dem unteren Bereich des Sammelbehälters 46 im Wege des Querkanals 33 die Drosseleinrichtung 36 vorgesehen ist, die gemäß dem Kennzeichen des Anspruchs 1 dimensioniert ist.

Durch diese Drosseleinrichtung 36 wird die Strömungsgeschwindigkeit des durch die zweiten Wärmetauschrohre 18 geführten Kältemittels im Vergleich mit dem durch das (jeweilige) erste Wärmetauschrohr 16 geführten Kältemittels reduziert, so daß auf diesem zweiten Weg durch die zweiten Wärmetauschrohre 18 das Kältemittel vom Zustand A in Fig. 9 in den unterkühlten Zustand C überführt wird. Im Sammelbehälter 46 wird dann das aus dem jeweiligen ersten Rohr 16 austretende und durch den Zwischenkanal 31 hochgeleitete gesättigte Kältemittel (Zustand B in Fig. 9) mit dem unterkühlten Kältemittel gemäß Zustandspunkt C in Fig. 9 am Austritt aus dem an die zweiten Wärmetauschrohre 18 angeschlossenen Querkanal 3 gemischt.

Die Mischung erfolgt gemäß dem Massenstromverhältnis des durch die ersten und zweiten Wärmetauschrohre strömenden Kältemittels, so daß bei der in Fig. 6 dargestellten Anzahl an ersten und zweiten Wärmetauschrohren 16 und 18 der Zustand des Gemisches F gemäß Fig. 9 sich aufgrund der Mehrzahl an zweiten Wärmetauschrohren 18 mehr dem Zustandspunkt C im Austrittsbereich der zweiten Wärmetauschrohre 18 hinter der Drosseleinrichtung 36 annähert.

## Patentansprüche

1. Verfahren zum Kondensieren in einen gesättigten Zustand und nachfolgendem Unterkühlen des inneren Kältemittels einer Kraftfahrzeugklimatisierung, bei der Umgebungsluft des Kraftfahrzeugs als äußeres Kühlmittel dient, durch Aufspalten des Weges des inneren Kältemittels im Einflußbereich des äußeren Kühlmittels in mindestens zwei danach wieder zusammengeführte Parallelwege,
wobei das innere Kältemittel in Strömungsrichtung vor den beiden Parallelwegen im Einflußbereich des äußeren Kühlmittels aus der Gasphase in die flüssige Phase teilkondensiert wird,
wobei dann auf dem ersten Parallelweg das innere Kältemittel weiter in den gesättigten Zustand kondensiert wird und verbliebene Gasphase des inneren Kältemittels abgeschieden wird, während auf dem zweiten Parallelweg das innere Kältemittel unterkühlt und im unterkühlten Zustand mit dem von der Gasphase befreiten gesättigten inneren Kältemittel des ersten Parallelwegs vereint wird,
**dadurch gekennzeichnet,**
**daß** nach dem Teilkondensieren dem ersten und dem zweiten Parallelweg das innere Kältemittel in gleichem oder wenigstens ähnlichem, z.B. durch Trägheitsentmischung etwas modifizierten, Verhältnis von flüssiger zu gasförmiger Phase zugeführt wird, und
**daß** danach auf dem zweiten Parallelweg die Kältemittelgeschwindigkeit des inneren Kältemittels im Verhältnis zur Kältemittelgeschwindigkeit auf dem ersten Parallelweg durch einen größeren Druckverlust reduziert und dabei dieser Druckverlust auf dem zweiten Parallelweg so bemessen wird, daß die Differenz des statischen Drucks am Ausgang des ersten Strömungswegs minus des statischen Drucks am Ausgang des zweiten Strömungswegs größer oder gleich dem Druck der Flüssigkeitssäule des inneren Kältemittels zwischen der Gas/Flüssigkeits-Trennfläche des inneren Kältemittels in Strömungsrichtung hinter dem Ausgang des ersten Parallelweges und einem Niveau oberhalb des Ausgangs des zweiten Parallelweges ist.

2. Verfahren nach Anspruch 1, **dadurch gekennzeichnet, daß** im zweiten Parallelweg der höhere Druckverlust durch Drosselung der Strömungsgeschwindigkeit am Ende des zweiten Parallelweges und/oder während des zweiten Parallelweges eingestellt wird.

3. Verfahren nach Anspruch 1 oder 2, **dadurch gekennzeichnet, daß** im zweiten Parallelweg der höhere Druckverlust durch Absenken des Eingangsdrucks am zweiten Parallelweg im Verhältnis zum Eingangsdruck am ersten Parallelweg eingestellt wird.

4. Verfahren nach Anspruch 3, **dadurch gekennzeichnet, daß** die relativ unterschiedlichen Eingangsdrücke am ersten und am zweiten Parallelweg unter Nutzung des Bernoulli-Effekts erzeugt werden.

5. Verfahren nach einem der Ansprüche 1 bis 4, **dadurch gekennzeichnet, daß** das Teilkondensieren unterhalb der beiden Parallelwege vorgenommen wird und dabei die Höhendifferenz zwischen einem unteren Niveau des Bereichs des Teilkondensierens, bei mehreren Eintrittsöffnungen der tiefsten Eintrittsöffnung, des inneren Kältemittels in den Weg des Teilkondensierens bis knapp unterhalb des Niveaus des ersten Parallelwegs für den Ausgleich der Schwankungen der Gas/Flüssigkeits-Trennfläche in Strömungsrichtung hinter dem ersten Parallelweg in Abhängigkeit von unterschiedlichen und/oder sich ändernden Füllmengen des inneren Kältemittels und/oder wechselnden Betriebszuständen des Kraftfahrzeugs genutzt wird.

6. Verflüssiger des inneren Kältemittels einer Kraftfahrzeugklimatisierungseinrichtung mit einem Netz aus horizontal orientierten und parallel übereinander angeordneten Wärmetauschrohren (2), die von der Umgebungsluft des Kraftfahrzeugs als äußeres Kühlmittel beaufschlagbar sind und die über beidseitige vertikal orientierte Verteil/Sammel-Rohre (6,8) miteinander strömungsmäßig zur Führung eines inneren Kältemittels verschaltet sind,
wobei die Verschaltung in unterschiedlichen Höhenbereichen einerseits mindestens ein zunächst durchströmbares und zu einer Teilkondensation nutzbares drittes Wärmetauschrohr (14) und andererseits eine danach durchströmbare Parallelschaltung mindestens eines ersten (16) und mindestens eines zweiten (18) Wärmetauschrohres aufweist, bei der das jeweilige erste Wärmetauschrohr (16) zur weiteren Kondensation in einen teilweise gesättigten Zustand und das jeweilige zweite Wärmetauschrohr (18) zu einer Unterkühlung nutzbar sind, und
wobei in Strömungsrichtung hinter dem jeweils strömungsmäßig letzten ersten Wärmetauschrohr (16) eine Einrichtung (46) zum Abscheiden verbliebener Gasphase angeordnet ist,
**dadurch gekennzeichnet,**
**daß** ein Verteil/Sammel-Rohr (6) das aus dem jeweiligen strömungsmäBig letzten dritten Wärmetauschrohr (14) austretende teilkondensierte Kältemittel im wesentlichen unter Einhaltung des Gas/Flüssigkeits-Verhältnisses auf die ersten (16) und die zweiten (18) Wärmetauschrohre verteilt,
**daß** die Einrichtung zum Abscheiden verbliebener Gasphase des aus dem jeweils strömungsmäßig letzten ersten Wärmetauschrohr austretenden Kältemittels ein Sammelbehälter (46) ist, der sich längs der Höhe des Verflüssigers erstreckt, und in den Bereichen seines oberen und seines unteren Endes mit dem jeweiligen ersten (16) bzw. zweiten (18) Wärmetauschrohr kommuniziert, wobei die eine Kommunikationsverbindung in einem vertikal verlaufenden Zwischenkanal (31) und die andere Kommunikationsverbindung in einem horizontal orientierten Querkanal (33) einer baulichen Zusammenfassung aus Sammelbehälter (46) und Verteil/Sammel-Rohr (8) ausgebildet ist und wobei der Austritt (12) des Kältemittels aus dem Verflüssiger im Bereich des unteren Endes des Sammelbehälters (46) angeordnet ist,
**daß** eine Einrichtung (36) zum Erzeugen einer geringeren Strömungsgeschwindigkeit des Kältemittels in dem jeweiligen zweiten Wärmetauschrohr (18) in bezug auf das jeweilige erste Wärmetauschrohr (16) vorgesehen ist,
**daß** die dritten Wärmetauschrohre (14) in einem Höhenbereich oberhalb der ersten und zweiten Wärmetauschrohre (16,18) angeordnet sind,
**daß** das jeweilige erste Wärmetauschrohr (16) seine teilkondensierte Phase des Kältemittels über den Zwischenkanal (31) dem Bereich des oberen Endes des Sammelbehälters (46) zuführt, und
**daß** das jeweilige zweite Wärmetauschrohr (18) sein unterkühltes Kältemittel dem Bereich des unteren Endes des Sammelbehälters (46) zuführt.

7. Verflüssiger nach Anspruch 6, **dadurch gekennzeichnet, daß** die Einrichtung zum Erzeugen einer geringeren Strömungsgeschwindigkeit eine Drosseleinrichtung an der Ausmündung des jeweiligen zweiten Wärmetauschrohres in ein Verteil/Sammel-Rohr und/oder eine Drosseleinrichtung in einer Ausgangsöffnung einer Sammelkammer in einem Verteil/Sammel-Rohr im Ausmündungsbereich des jeweiligen zweiten Wärmetauschrohres aufweist.

8. Verflüssiger nach Anspruch 6 oder 7, **dadurch gekennzeichnet, daß** die Einrichtung zum Erzeugen einer geringeren Strömungsgeschwindigkeit eine dem jeweiligen zweiten Wärmetauschrohr strömungsmäßig vorgeschaltete Drosseleinrichtung ist, die beispielsweise an der Eingangsöffnung des jeweiligen zweiten Wärmetauschrohres oder an einer Eingangsöffnung einer vorgeschalteten Vorkammer in einem Verteil/Sammel-Rohr angeordnet sein kann.

9. Verflüssiger nach einem der Ansprüche 6 bis 8, **dadurch gekennzeichnet, daß** die Einrichtung zum Erzeugen einer geringeren Strömungsgeschwindigkeit durch unterschiedliche Auslegung des jeweiligen zweiten Wärmetauschrohres im Vergleich zu dem jeweiligen ersten Wärmetauschrohr im Hinblick auf inneren Rohrdurchmesser, Länge des Strömungswegs, Rohrform, Einbauten und/oder Charakteristik der inneren Oberfläche realisiert ist.

10. Verflüssiger nach einem der Ansprüche 6 bis 9, **dadurch gekennzeichnet, daß** der Sammelbehälter und das mit ihm baulich vereinigte Verteil/Sammel-Rohr von gesonderten Bauteilen gebildet ist, die zwischen sich den weiterführenden Kanal ausbilden.

11. Verflüssiger nach Anspruch 10, dadurch gekennzeichlnet, daß die gesonderten Bauteile aus Aluminium oder einer Aluminiumlegierung bestehen, das Verteil/Sammel-Rohr aus mit Hartlot beschichtetem Blech geformt ist und der Sammelbehälter mitsamt dem weiterführenden Kanal ein integrales Extrusionsprofil ist.

12. Verflüssiger nach einem der Ansprüche 6 bis 11, **dadurch gekennzeichnet, daß** der Sammelbehälter mit einem Trocknereinsatz versehen ist.

13. Verflüssiger nach Anspruch 12, **dadurch gekennzeichnet, daß** der Trocknereinsatz (58) zwischen einem unteren Verschlußteil (62) des Sammelbehälters (46) und einem im innerhalb des Sammelbehälters (46) ausgebildeten Anschlag (65) eingespannt ist.

14. Verflüssiger nach Anspruch 13, **dadurch gekennzeichnet, daß** der Anschlag (65) von über den Umfang des Gehäusemantels des Sammelbehälters (46) verteilten Eindellungen gebildet ist.

15. Verflüssiger nach Anspruch 14, **dadurch gekennzeichnet, daß** drei Eindellungen vorgesehen sind.

16. Verflüssiger nach einem der Ansprüche 13 bis 15, **dadurch gekennzeichnet, daß** der Trocknereinsatz (58) mehrteilig ausgebildet ist, wobei die wirksame Trocknerfüllung (64) in einem strömungsdurchlässigen Käfig gehalten ist, bei dem ein dem Verschlußteil (62) zugewandter Käfigboden (70) und ein den Käfigboden auf der dem Verschlußteil 62) abgewandten Seite zum Käfig (66,70) ergänzender Käfignapf (66) zusammengespannt sind.

17. Verflüssiger nach Anspruch 16, **dadurch gekennzeichnet, daß** der Käfigboden (70) axial elastisch ausgebildet ist.

18. Verflüssiger nach Anspruch 16 oder 17, **dadurch gekennzeichnet, daß** auf den Käfigboden ein Filtervließ (68) aufgelegt ist.

19. Verflüssiger nach einem der Ansprüche 13 bis 18, **dadurch gekennzeichnet, daß** der Verschlußteil (62) ein Schraubstopfen ist, der oberhalb eines Gewindeeingriffs (72) mit dem Sammelbehälter (46) über eine Dichteinrichtung (74) mit der Innenwand des Sammelbehälters (46) zusammenwirkt, und daß die Wand des Sammelbehälters (46) mit einer Druckentlastungsöffnung (76) versehen ist, die bei geschlossenem Sammelbehälter (46) in einer Höhe oberhalb des Gewindeeingriffs (72) und unterhalb der Dichteinrichtung (74) so angeordnet ist, daß beim Herausschrauben des Verschlußteils (62) aus dem Sammelbehälter (46) die Druckentlastungsöffnung (76) mit dem Innenraum des Sammelbehälters (46) kommuniziert, ehe der Gewindeeingriff (72) unwirksam wird.

20. Verflüssiger nach Anspruch 19, **dadurch gekennzeichnet, daß** die Druckentlastungsöffnung (76) eine Ablaßöffnung ist, an der Kältemittel aus dem Sammelbehälter (46) austreten kann, ehe das Gewinde außer Eingriff kommt.

21. Verflüssiger nach einem der Ansprüche 6 bis 20, **dadurch gekennzeichnet, daß**
die Einrichtung zum Abscheiden verbliebener Gasphase des aus dem jeweils strömungsmäßig letzten ersten Wärmetauschrohr austretenden Kältemittels mit einem Verteil/Sammel-Rohr baulich zusammengefaßt ist.

22. Verflüssiger nach Anspruch 21, **dadurch gekennzeichnet, daß** die Einrichtung zum Erzeugen einer geringeren Strömungsgeschwindigkeit eine Drosseleinrichtung an der Ausmündung des jeweiligen zweiten Wärmetauschrohres in ein Verteil/Sammel-Rohr und/oder eine Drosseleinrichtung in einer Ausgangsöffnung einer Sammelkammer in einem Verteil/Sammel-Rohr im Ausmündungsbereich des jeweiligen zweiten Wärmetauschrohres aufweist.

23. Verflüssiger nach Anspruch 21 oder 22, **dadurch gekennzeichnet, daß** die Einrichtung zum Erzeugen einer geringeren Strömungsgeschwindigkeit eine dem jeweiligen zweiten Wärmetauschrohr strömungsmäßig vorgeschaltete Drosseleinrichtung ist, vorzugsweise an der Eingangsöffnung des jeweiligen zweiten Wärmetauschrohres oder an einer Eingangsöffnung einer vorgeschalteten Vorkammer in einem Verteil/Sammel-Rohr.

24. Verflüssiger nach einem der Ansprüche 21 bis 23, **dadurch gekennzeichnet, daß** die Einrichtung zum Erzeugen einer geringeren Strömungsgeschwindigkeit durch unterschiedliche Auslegung des jeweiligen zweiten Wärmetauschrohres im Vergleich zu dem jeweiligen ersten Wärmetauschrohr im Hinblick auf inneren Rohrdurchmesser, Länge des Strömungswegs, Rohrform, Einbauten und/oder Charakteristik der inneren Oberfläche realisiert ist.

25. Verflüssiger nach einem der Ansprüche 21 bis 24, bei dem die dritten Wärmetauschrohre in einem Höhenbereich oberhalb der ersten Wärmetauschrohre angeordnet sind, **dadurch gekennzeichnet, daß** im Innenraum desselben Verteil/Sammel-Rohres drei übereinanderliegende Kammern jeweils durch eine Zwischenwand abgeteilt sind, von denen die oberste Kammer mit dem/den dritten Wärmetauschrohr bzw. Wärmetauschrohren kommuniziert und durch die obere Trennwand von der mittleren Kammer strömungsmäßig getrennt ist, die mittlere Kammer mit dem jeweiligen ersten Wärmetauschrohr und die zugleich als Ausgangskammer aus dem Verflüssiger dienende untere Kammer mit dem jeweiligen zweiten Wärmetauschrohr kommuniziert, wobei die untere Trennwand unter Bildung der Einrichtung zum Abscheiden verbliebener Gasphase des aus dem jeweiligen ersten Wärmetauschrohr kommenden Kältemittels mit mindestens einer Durchgangsöffnung für flüssiges Kältemittel aus dem jeweiligen ersten Rohr aus der mittleren Kammer in die untere Kammer versehen ist.

26. Verflüssiger nach Anspruch 25, **dadurch gekennzeichnet, daß** eine Trennwand oder beide Trennwände unter Erweiterung der mittleren Kammer einen vertikal ausgebogenen Verlauf hat bzw. haben.

## Claims

1. Method for condensing to a saturated state and subsequently supercooling the internal coolant of a motor vehicle air conditioning system, in which motor vehicle ambient air is used as external coolant, by splitting the path of the internal coolant, in the area of influence of the external coolant, into at least two parallel paths which are subsequently brought together again,
the internal coolant being partially condensed from the gas phase into the liquid phase upstream of the two parallel paths, as seen in the direction of flow, in the area of influence of the external coolant,
the internal coolant then being condensed further to the saturated state on the first parallel path, and residual gas phase of the internal coolant being separated off, while on the second parallel path the internal coolant is supercooled and, in the supercooled state, combined with the saturated internal coolant from which the gas phase has been removed, from the first parallel path,
**characterized in that** following the partial condensation the first and second parallel paths are fed with the internal coolant in an identical or at least similar ratio, for example modified slightly by inertia segregation, ratio of liquid phase to gaseous phase, and
**in that** the velocity of the internal coolant on the second parallel path in relation to the coolant velocity on the first parallel path is then reduced by means of a greater pressure drop, and this pressure drop on the second parallel path is of a level which is such that the difference between the static pressure at the outlet of the first flow path minus the static pressure at the outlet of the second flow path is greater than or equal to the pressure of the liquid column of the internal coolant between the gas/liquid interface of the internal coolant downstream of the outlet of the first parallel path, as seen in the direction of flow, and a level above the outlet of the second parallel path.

2. Method according to Claim 1, **characterized in that** the higher pressure drop in the second parallel path is established by restricting the flow velocity at the end of the second parallel path and/or over the course of the second parallel path.

3. Method according to Claim 1 or 2, **characterized in that** the higher pressure drop in the second parallel path is established by reducing the entry pressure at the second parallel path in relation to the entry pressure at the first parallel path.

4. Method according to Claim 3, **characterized in that** the relatively different entry pressures at the first and second parallel paths are generated by exploiting the Bernoulli effect.

5. Method according to one of Claims 1 to 4, **characterized in that** the partial condensation is carried out below the two parallel paths, and the difference in height between a lower level of the partial condensation area, in the case of a plurality of inlet openings the lowest inlet opening, of the internal coolant in the path of the partial condensation and just below the level of the first parallel path is utilized to compensate for the fluctuations in the gas/liquid interface downstream of the first parallel path, as seen in the direction of flow, as a function of different and/or changeable quantities of the internal coolant and/or varying operating states of the motor vehicle.

6. Condenser for the internal coolant of a motor vehicle air conditioning device, having a network of heat-exchanger tubes (2) which are horizontally oriented, arranged parallel one above the other, can be acted on by the surrounding air of the motor vehicle as external coolant and are interconnected, in terms of flow, by means of collection/distribution manifolds (6, 8) which are oriented vertically on both sides, in order to guide an internal coolant,
the interconnection having, at different areas of the height, on the one hand at least one third heat-exchanger tube (14), through which medium can initially flow and which can be used for partial condensation, and, on the other hand, a parallel circuit, through which medium can subsequently flow, comprising at least one first heat-exchanger tube (16) and at least one second heat-exchanger tube (18), in which circuit the respective first heat-exchanger tube (16) can be used for further condensation to a partially saturated state, and the respective second heat-exchanger tube (18) can be used for supercooling, and
a device (46) for separating off residual gas phase being arranged downstream of in each case the last first heat-exchanger tube (16), in terms of flow as seen in the direction of flow,
**characterized in that** a collection/distribution manifold (6) distributes the partially condensed coolant which emerges from in each case the last third heat-exchanger tube (14), in terms of flow, to the first (16) and second (18) heat-exchanger tubes, while substantially maintaining the gas/liquid ratio,
**in that** the device for separating residual gas phase out of the coolant emerging from in each case the last first heat-exchanger tube, in terms of flow is a collection vessel which extends along the height of Condenser and, in the regions of its top and bottom ends, is in communication with the corresponding first (16) and second (18) heat-exchanger tube, one communicating connection being formed in a vertically running intermediate passage (31) and the other communicating connection being formed in a horizontally oriented transverse passage (33) of a structural combination of collection vessel (46) and collection/distribution manifold (8), and the outlet (12) of the coolant from the condenser being arranged in the region of the bottom end of the collection vessel (46),
**in that** a device (36) for generating a lower flow velocity of the coolant in the corresponding second heat-exchanger tube (18) with respect to the corresponding first heat-exchanger tube (16) is provided,
**in that** the third heat-exchanger tubes (14) are arranged in a region of the height which is above the first and second heat-exchanger tubes (16, 18),
**characterized in that** the corresponding first heat-exchanger tube (16) feeds its partially condensed phase of the coolant, via the intermediate passage (31), to the region of the top end of the collection vessel (46), and
**in that** the corresponding second heat-exchanger tube (18) feeds its supercooled coolant to the region of the bottom end of the collection vessel (46).

7. Condenser according to Claim 6, **characterized in that** the device for generating a lower flow velocity has a restrictor device at the point where the particular second heat-exchanger tube opens out into a collection/distribution manifold and/or a restrictor device in an outlet opening of a collection chamber in a collection/distribution manifold, in the area where the particular second heat-exchanger tube opens out.

8. Condenser according to Claim 6 or 7, **characterized in that** the device for generating a lower flow velocity is a restrictor device which is connected upstream, in terms of flow, of the corresponding second heat-exchanger tube and can be arranged, for example, at the inlet opening of the corresponding second heat-exchanger tube or at an inlet opening of an upstream prechamber in a collection/distribution manifold.

9. Condenser according to one of Claims 6 to 8, **characterized in that** the device for generating a lower flow velocity is realized by differently designing the corresponding second heat-exchanger tube by comparison with the corresponding first heat-exchanger tube with regard to internal tube diameter, length of the flow path, shape of tube, internals and/or characteristic of the internal surface area.

10. Condenser according to one of Claims 6 to 9, **characterized in that** the collection vessel and the collection/distribution manifold which is structurally combined therewith is formed by separate components which form the further passage between them.

11. Condenser according to Claim 10, **characterized in that** the separate components consist of aluminium or an aluminium alloy, the collection/distribution manifold is formed from sheet metal coated with hard solder, and the collection vessel together with the further passage is an integral extruded section.

12. Condenser according to one of Claims 6 to 11, **characterized in that** the collection vessel is provided with a dryer insert.

13. Condenser according to Claim 12, **characterized in that** the dryer insert (58) is clamped between a bottom closure part (62) of the collection vessel (46) and a stop (65) which is formed in the interior of the collection vessel (46).

14. Condenser according to Claim 13, **characterized in that** the stop (65) is formed by indentations which are distributed over the periphery of the housing shell of the collection vessel (46).

15. Condenser according to Claim 14, **characterized in that** three indentations are provided.

16. Condenser according to one of Claims 13 to 15, **characterized in that** the dryer insert (58) is of multipart design, the active dryer filling (64) being held in a flow-permeable cage, in which a cage base (70), which faces towards the closure part (62), and a cage cup (66), which completes the cage base on the side which is remote from the closure part (62), so as to form the cage (66, 70), are clamped together.

17. Condenser according to Claim 16, **characterized in that** the cage base (70) is of axially elastic design.

18. Condenser according to Claim 16 or 17, **characterized in that** a filter mat (68) is laid onto the cage base.

19. Condenser according to one of Claims 13 to 18, **characterized in that** the closure part (62) is a threaded stopper which, above a threaded engagement (72) with the collection vessel (46), interacts with the inner wall of the collection vessel (46) via a sealing device (74), and **in that** the wall of the collection vessel (46) is provided with a pressure-relief opening (76) which, when the collection vessel (46) is closed, is arranged at a level above the threaded engagement (72) and below the sealing device (74), in such a way that when the closure part (62) is unscrewed from the collection vessel (46) the pressure-relief opening (76) is in communication with the interior of the collection vessel (46) before the threaded engagement (72) becomes inactive.

20. Condenser according to Claim 19, **characterized in that** the pressure-relief opening (76) is an outlet opening at which coolant can emerge from the collection vessel (46) before the screw thread comes out of engagement.

21. Condenser according to one of Claims 6 to 20, **characterized in that** the device for separating residual gas phase out of the coolant emerging from in each case the last first heat-exchanger tube, in terms of flow, is structurally combined with a collection/ distribution manifold.

22. Condenser according to Claim 21, **characterized in that** the device for generating a lower flow velocity has a restrictor device at the point where the corresponding second heat-exchanger tube opens out into a collection/distribution manifold and/or a restrictor device at an outlet opening of a collection chamber in a collection/distribution tube in the region where the corresponding second heat-exchanger tube opens out.

23. Condenser according to Claim 21 or 22, **characterized in that** the device for generating a lower flow velocity is a restrictor device which is connected upstream, in terms of flow, of the corresponding second heat-exchanger tube, preferably at the inlet opening of the corresponding second heat-exchanger tube or at an inlet opening of an upstream prechamber in a collection/distribution manifold.

24. Condenser according to one of Claims 21 to 23, **characterized in that** the device for generating a lower flow velocity is realized by differently designing the corresponding second heat-exchanger tube by comparison with the corresponding first heat-exchanger tube with regard to internal tube diameter, length of the flow path, shape of tube, internals and/or characteristic of the internal surface area.

25. Condenser according to one of Claims 21 to 24, in which the third heat-exchanger tubes are arranged in a region of the height which is above the first heat-exchanger tubes, **characterized in that** in the interior of the same collection/distribution manifold three chambers, one on top of the other, are divided up in each case by means of a partition, the top chamber of which is in communication with the third heat-exchanger tube(s) and is separated from the middle chamber, in terms of flow, by the top partition, the middle chamber is in communication with the corresponding first heat-exchanger tube, and the bottom chamber, which at the same time serves as an exit chamber from Condenser, is in communication with the corresponding second heat-exchanger tube, the bottom partition being provided with at least one passage opening for liquid coolant from the corresponding first tube to pass out of the middle chamber into the bottom chamber, so as to form the device for separating residual gas phase out of the coolant emerging from the corresponding first heat-exchanger tube.

26. Condenser according to Claim 25, **characterized in that** one partition or both partitions is or are bent out vertically so as to widen the middle chamber.

## Revendications

1. Procédé pour condenser, dans un état saturé et pour sous-refroidir subséquemment le réfrigérant interne d'une climatisation d'un véhicule automobile, dans lequel l'air environnant du véhicule automobile sert de réfrigérant externe, par séparation du chemin du réfrigérant interne dans la région d'influence du réfrigérant externe en au moins deux chemins parallèles ensuite à nouveau réunis,
dans lequel le réfrigérant interne est partiellement condensé dans la direction de l'écoulement avant les deux chemins parallèles dans la région d'influence du réfrigérant externe de la phase gazeuse dans la phase liquide,
dans lequel ensuite, sur le premier chemin parallèle, le réfrigérant interne est condensé davantage dans l'état saturé et la phase gazeuse restante du réfrigérant interne est séparée, tandis que sur le deuxième chemin parallèle, le réfrigérant interne est sous-refroidi et est réuni dans l'état sous-refroidi au réfrigérant interne saturé débarrassé de la phase gazeuse du premier chemin parallèle,
**caractérisé en ce que**
après la condensation partielle, le réfrigérant interne est acheminé au premier et au deuxième chemin parallèle avec le même ou au moins approximativement le même rapport de phase liquide à phase gazeuse, par exemple modifié quelque peu par dissociation sous l'effet de l'inertie, et
**en ce qu'**ensuite la vitesse du réfrigérant interne sur le deuxième chemin parallèle est réduite par rapport à la vitesse du réfrigérant sur le premier chemin parallèle par une perte de pression relativement importante et cette perte de pression est réglée sur le deuxième chemin parallèle de telle sorte que la différence entre la pression statique à la sortie du premier chemin d'écoulement et la pression statique à la sortie du deuxième chemin d'écoulement soit supérieure ou égale à la pression de la colonne de liquide du réfrigérant interne entre la surface de séparation gaz/liquide du réfrigérant interne dans la direction d'écoulement derrière la sortie du premier chemin parallèle et un niveau au-dessus de la sortie du deuxième chemin parallèle.

2. Procédé selon la revendication 1, **caractérisé en ce que** dans le deuxième chemin parallèle, la perte de pression relativement importante est ajustée par un étranglement de la vitesse d'écoulement à l'extrémité du deuxième chemin parallèle et/ou dans le deuxième chemin parallèle.

3. Procédé selon la revendication 1 ou 2, **caractérisé en ce que**, dans le deuxième chemin parallèle, la perte de pression relativement importante est ajustée par abaissement de la pression d'entrée au niveau du deuxième chemin parallèle par rapport à la pression d'entrée au niveau du premier chemin parallèle.

4. Procédé selon la revendication 3, **caractérisé en ce que** les pressions d'entrée relativement différentes au niveau du premier et du deuxième chemin parallèle sont produites en utilisant l'effet Bernoulli.

5. Procédé selon l'une quelconque des revendications 1 à 4, **caractérisé en ce que** la condensation partielle est réalisée sous les deux chemins parallèles et l'on utilise en l'occurrence la différence de hauteur entre un niveau inférieur de la région de condensation partielle, dans le cas de plusieurs ouvertures d'entrée, de l'ouverture d'entrée la plus basse, du réfrigérant interne dans le chemin de condensation partielle jusqu'à presque en dessous du niveau du premier chemin parallèle pour la compensation des oscillations de la surface de séparation gaz/liquide dans la direction d'écoulement derrière le premier chemin parallèle en fonction de quantités de remplissage différentes et/ou variables du réfrigérant interne et/ou d'états de fonctionnement variables du véhicule automobile.

6. Condenseur de réfrigérant interne d'un dispositif de climatisation d'un véhicule automobile, comprenant un réseau de tubes d'échange thermique (2) orientés horizontalement et disposés parallèlement les uns au-dessus des autres, lesquels peuvent être sollicités par l'air environnant du véhicule automobile servant de réfrigérant externe et lesquels sont connectés les uns aux autres par le biais de tubes distributeurs/collecteurs (6, 8) orientés verticalement des deux côtés en termes d'écoulement en vue de conduire un réfrigérant interne,
dans lequel la connexion présente, dans différentes régions en hauteur, d'une part au moins un troisième tube d'échange thermique (14) pouvant être parcouru par le courant en premier et pouvant être utilisé en vue d'une condensation partielle et d'autre part un branchement en parallèle, pouvant être parcouru subséquemment par le courant, d'au moins un premier (16) et d'au moins un deuxième (18) tube d'échange thermique, le premier tube d'échange thermique respectif (16) pouvant être utilisé pour une condensation supplémentaire dans un état partiellement saturé et le deuxième tube d'échange thermique respectif (18) pouvant être utilisé pour un sous-refroidissement, et
dans lequel, dans la direction de l'écoulement derrière le dernier, dans le sens de l'écoulement, premier tube d'échange thermique (16), on prévoit un dispositif (46) pour séparer la phase gazeuse restante,
**caractérisé en ce que**
un tube distributeur/collecteur (6) répartit le réfrigérant partiellement condensé sortant du dernier, dans le sens de l'écoulement, troisième tube d'échange thermique (14) respectif essentiellement en respectant le rapport gaz/liquide, entre les premier (16) et deuxième (18) tubes d'échange thermique,
**en ce que** le dispositif pour séparer la phase gazeuse restante du réfrigérant sortant du dernier, dans le sens de l'écoulement, premier tube d'échange thermique respectif, est un récipient collecteur (46) qui s'étend le long de la hauteur du condenseur et qui communique, dans les régions de son extrémité supérieure et de son extrémité inférieure avec le premier (16), respectivement le deuxième (18) tube d'échange thermique, une liaison de communication dans un canal intermédiaire (31) s'étendant verticalement et l'autre liaison de communication dans un canal transversal (33) orienté horizontalement, d'un assemblage constructif constitué du récipient collecteur (46) et du tube distributeur/collecteur (8) étant réalisée et la sortie (12) du réfrigérant hors du condenseur étant prévue dans la région de l'extrémité inférieure du récipient collecteur (46),
**en ce qu'**il est prévu un dispositif (46) pour produire une vitesse d'écoulement réduite du réfrigérant dans le deuxième tube d'échange thermique respectif (18) par rapport au premier tube d'échange thermique respectif (16),
**en ce que** les troisièmes tubes d'échange thermique (14) sont disposés dans une région en hauteur au-dessus du premier et du deuxième tube d'échange thermique (16, 18),
**en ce que** le premier tube d'échange thermique respectif (16) conduit sa phase partiellement condensée du réfrigérant par le biais du canal intermédiaire (31) à la région de l'extrémité supérieure du récipient collecteur (46), et
**en ce que** le deuxième tube d'échange thermique respectif (18) conduit son réfrigérant sous-refroidi à la région de l'extrémité inférieure du récipient collecteur (46).

7. Condenseur selon la revendication 6, **caractérisé en ce que** le dispositif pour produire une vitesse d'écoulement réduite présente un dispositif d'étranglement à la sortie du deuxième tube d'échange thermique respectif dans un tube distributeur/collecteur et/ou un dispositif d'étranglement dans une ouverture de sortie d'une chambre de collecte dans un tube distributeur/collecteur dans la région de sortie du deuxième tube d'échange thermique respectif.

8. Condenseur selon la revendication 6 ou 7, **caractérisé en ce que** le dispositif pour produire une vitesse d'écoulement réduite est un dispositif d'étranglement monté avant le deuxième tube d'échange thermique respectif, dans le sens de l'écoulement, lequel peut par exemple être disposé au niveau de l'ouverture d'entrée du deuxième tube d'échange thermique respectif ou au niveau d'une ouverture d'entrée d'une préchambre montée en amont dans un tube distributeur/collecteur.

9. Condenseur selon l'une quelconque des revendications 6 à 8, **caractérisé en ce que** le dispositif pour produire une vitesse d'écoulement réduite est réalisé par une conception différente du deuxième tube d'échange thermique respectif par comparaison avec le premier tube d'échange thermique respectif en termes de diamètre intérieur de tube, de longueur du chemin d'écoulement, de forme du tube, d'éléments rapportés et/ou de caractéristique de surface interne.

10. Condenseur selon l'une quelconque des revendications 6 à 9, **caractérisé en ce que** le récipient collecteur et le tube distributeur/collecteur réuni à celui-ci dans la construction sont formés par des composants séparés qui forment entre eux le canal subséquent.

11. Condenseur selon la revendication 10, **caractérisé en ce que** les composants séparés se composent d'aluminium ou d'un alliage d'aluminium, le tube distributeur/collecteur est formé à partir de tôle revêtue de soudure dure et le récipient collecteur conjointement avec le canal subséquent est un profilé extrudé intégral.

12. Condenseur selon l'une quelconque des revendications 6 à 11, **caractérisé en ce que** le récipient collecteur est pourvu d'un insert de dessicatif.

13. Condenseur selon la revendication 12, **caractérisé en ce que** l'insert de dessicatif (58) est serré entre une partie de fermeture inférieure (62) du récipient collecteur (46) et une butée (65) réalisée à l'intérieur du récipient collecteur (46).

14. Condenseur selon la revendication 13, **caractérisé en ce que** la butée (65) est formée par des bossages répartis sur la circonférence de l'enveloppe du boîtier du récipient collecteur (46).

15. Condenseur selon la revendication 14, **caractérisé en ce que** l'on prévoit trois bossages.

16. Condenseur selon l'une quelconque des revendications 13 à 15, **caractérisé en ce que** l'insert de dessicatif (58) est réalisé en plusieurs parties, le remplissage de dessicatif efficace (64) étant maintenu dans une cage perméable à l'écoulement, dans laquelle un fond de cage (70) tourné vers la partie de fermeture (62) et une cuvette de cage (66) complétant le fond de cage du côté de la cage (66, 70) opposé à la partie de fermeture (62) sont serrés ensemble.

17. Condenseur selon la revendication 16, **caractérisé en ce que** le fond de cage (70) est réalisé de manière axialement élastique.

18. Condenseur selon la revendication 16 ou 17, **caractérisé en ce que** l'on place un voile filtrant (68) sur le fond de la cage.

19. Condenseur selon l'une quelconque des revendications 13 à 18, **caractérisé en ce que** la partie de fermeture (62) est un bouchon fileté qui coopère au-dessus d'un engagement vissé (72) avec le récipient collecteur (46) par le biais d'un dispositif de joint (74) avec la paroi interne du récipient collecteur (46), et **en ce que** la paroi du récipient collecteur (46) est pourvue d'une ouverture de décharge de pression (76) qui, lorsque le récipient collecteur (46) est fermé, est disposée à une hauteur au-dessus de l'engagement vissé (72) et en dessous du dispositif de joint (74) de telle sorte que lors du dévissage de la partie de fermeture (62) hors du récipient collecteur (46), l'ouverture de décharge de pression (76) communique avec l'espace interne du récipient collecteur (46) avant que l'engagement vissé (72) ne devienne inopérant.

20. Condenseur selon la revendication 19, **caractérisé en ce que** l'ouverture de décharge de pression (76) est une ouverture de sortie au niveau de laquelle le réfrigérant peut sortir du récipient collecteur (46) avant que le filetage ne soit désengagé.

21. Condenseur selon l'une quelconque des revendications 6 à 20, **caractérisé en ce que** le dispositif pour séparer la phase gazeuse restante du réfrigérant sortant du dernier, dans le sens de l'écoulement, premier tube d'échange thermique respectif, est assemblé de manière constructive à un tube distributeur/collecteur.

22. Condenseur selon la revendication 21, **caractérisé en ce que** le dispositif pour produire une vitesse d'écoulement réduite présente un dispositif d'étranglement à la sortie du deuxième tube d'échange thermique respectif dans un tube distributeur/collecteur et/ou un dispositif d'étranglement dans une ouverture de sortie d'une chambre de collecte dans un tube distributeur/collecteur dans la région de sortie du deuxième tube d'échange thermique respectif.

23. Condenseur selon la revendication 21 ou 22, **caractérisé en ce que** le dispositif pour produire une vitesse d'écoulement réduite est un dispositif d'étranglement monté avant le deuxième tube d'échange thermique respectif, dans le sens de l'écoulement, de préférence au niveau de l'ouverture d'entrée du deuxième tube d'échange thermique respectif ou au niveau d'une ouverture d'entrée d'une préchambre montée en amont dans un tube distributeur/collecteur.

24. Condenseur selon l'une quelconque des revendications 21 à 23, **caractérisé en ce que** le dispositif pour produire une vitesse d'écoulement réduite est réalisé par une conception différente du deuxième tube d'échange thermique respectif par comparaison avec le premier tube d'échange thermique respectif en termes de diamètre intérieur de tube, de longueur du chemin d'écoulement, de forme du tube, d'éléments rapportés et/ou de caractéristique de surface interne.

25. Condenseur selon l'une quelconque des revendications 21 à 24, dans lequel les troisièmes tubes d'échange thermique sont disposés dans une région en hauteur au-dessus des premiers tubes d'échange thermique, **caractérisé en ce que** dans l'espace interne du même tube distributeur/collecteur, trois chambres superposées sont séparées à chaque fois par une paroi intermédiaire, dont la chambre la plus supérieure communique avec le/les troisième(s) tube(s) d'échange thermique et est séparée de la chambre intermédiaire dans le sens de l'écoulement par la paroi de séparation supérieure, la chambre intermédiaire communique avec le premier tube d'échange thermique respectif et la chambre inférieure servant en même temps de chambre de sortie hors du condenseur communique avec le deuxième tube d'échange thermique respectif, la paroi de séparation inférieure étant pourvue, en formant le dispositif pour séparer la phase gazeuse restante du réfrigérant sortant du premier tube d'échange thermique respectif, d'au moins une ouverture de passage pour le réfrigérant liquide sortant du premier tube respectif hors de la chambre intermédiaire dans la chambre inférieure.

26. Condenseur selon la revendication 25, **caractérisé en ce qu'**une paroi de séparation ou deux parois de séparation a ou ont une allure courbée verticalement en élargissant la chambre intermédiaire.
